# EUROPEAN PATENT SPECIFICATION

(11) **EP 2 789 067 B1**
(45) Date of publication and mention of the grant of the patent: **08.02.2017**
(21) Application number: 12748062.2
(22) Date of filing: 31.07.2012
(51) Int. Cl.: F03D 80/30

(54) **LIGHTNING CURRENT TRANSFER SYSTEM FOR A WIND TURBINE GENERATOR**
BLITZSTROMÜBERTRAGUNGSSYSTEM FÜR EINEN WINDTURBINENGENERATOR
SYSTÈME DE TRANSMISSION DE COURANT DE FOUDRE POUR UN GÉNÉRATEUR DE TURBINE ÉOLIENNE

(30) Priority: 09.12.2011 WO PCT/JP2011/078602; 09.12.2011 WO PCT/JP2011/006902
(43) Date of publication of application: 15.10.2014
(73) Proprietor: Mitsubishi Heavy Industries, Ltd., Tokyo 108-8215 (JP); Global Lightning Protection Services A/S, Herning 7400 (DK)
(72) Inventor: FUJIOKA, Hideyasu, Tokyo 108-8215 (JP); KAMEDA, Takuro, Tokyo 108-8215 (JP); FURUKAWA, Syogo, Tokyo 108-8215 (JP); KROGH, Thomas Holm, DK-Herning 7400 (DK)
(74) Representative: RGTH
(86) International application number: PCT/JP2012/004862
(87) International publication number: WO 2013/084374

(56) References cited:
- DE-A1-102004 010 104

## Description

### Technical Field

The disclosure relates to a lightning current transfer system for a wind turbine generator. The disclosure further relates to a wind turbine generator comprising such a lightning current transfer system.

### Background Art

From WO 2012/016726 A2 a lightning current transfer arrangement of a wind turbine is known, the lightning current transfer arrangement being provided to enable lightning current and electrostatic discharge current to be discharged from a first and a second part of the wind turbine being rotatable relative to each other. The lightning current transfer arrangement is arranged to provide electrical contact between the first and second parts, and has a current transfer unit electrically coupled to the first part, and an electrically conductive slideway electrically coupled to the second part, and rotatable relative to the current transfer unit. The current transfer unit further has a slider elastically biased towards the slideway, where the slider comprises a slide piece made of conductive plastics and contacting the slideway, and an electrode made of metal and directed towards the slideway, the electrode and the slide piece being rigidly coupled.

Especially, what is called a "lightning current transfer arrangement" in WO 2012/016726 A2 is formed by a current transfer unit, a blade slideway associated to the current transfer unit and a nacelle slideway. As a current transfer unit is provided for each rotor blade, the nacelle slideway as shown in WO 2012/016726 A2 is shared between three lightning current transfer arrangements, and in particular, the three transfer units.

The current transfer unit of WO 2012/016726 A2 has a base support fixedly mounted to a rotor hub by means of mounting bolts. Thus, the current transfer unit rotates with a main shaft of the wind turbine. The slider is mounted to one end of an elastically deformable strip of electrically insulating material which is - at the other end - mounted to a mounting flange of the base support. This mounting flange projects towards the nacelle so that the deformable strip is bent to elastically bias the slider towards the nacelle slideway.

Further, the electrodes of the two sliders are electrically coupled by a cable, thereby providing a current path from the blade to the nacelle and bypassing the hub. This cable is loosely, that is unsupportedly, arranged between the electrodes of the two sliders.
DE 10 2004 010 104 A1 discloses a lightning protection system of a wind turbine for dissipating electrical energy from a lightning strike into the base of the wind turbine, wherein the lightning path leads from the rotor blades and the hub via the nacelle to the tower and has at least one lightning transmitter for passing on between two components being able to move relative to one another.
In EP 2 267 280 A2 a transversal conduction lightning protection system is disclosed which comprises a substantially planar sheet of conductive or semiconductive material being disposed internal to the blade tip region or wing tip region as well as between the suction side and pressure side of the blade.

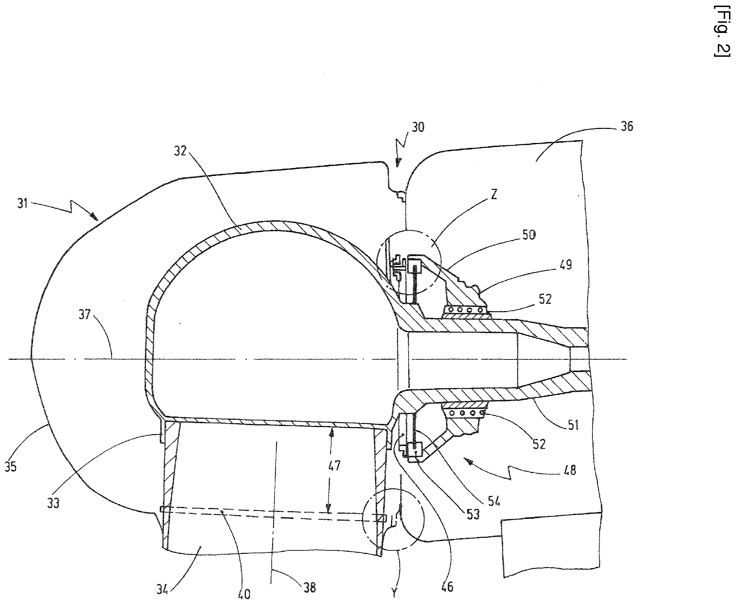

In order to provide for an effective lightning protection of a wind turbine and the machinery thereof, especially bearings, generators and other electric and electronic equipment comprised in the wind turbine, it is essential to prevent lightning currents from flowing through the inner parts of the wind turbine. Therefore, a minimum distance between those inner parts of the wind turbine generator and the portions of the lightning current transfer arrangement has to be kept under all circumstances. Thus, leading the lightning currents along the outside of the wind turbine, that is outside the hub and the nacelle, is preferred. As shown in Figures 2A and 2B of WO 2012/016726 A2, the current transfer unit is mounted on an outside of the hub.

However, wind turbines, also denoted as wind turbine generators, are heavily impacted by weather influences. This leads to increased problems with moisture or ice from precipitation and resulting corrosion especially arising on outside, exposed peripheral portions of the wind turbine generator, and it especially holds for offshore use of wind turbine generators, where these problems are increased by salt water. Furthermore, a rigid construction of the lightning current transfer arrangement is preferred in view of mechanical and electrical stress to be expected.

### [Summary of Invention]

It is an object of at least some embodiments of the present invention to design a lightning current transfer system for a wind turbine generator by which the problems mentioned beforehand are solved and effective protection of the wind turbine generator from damage caused by lightning is achieved. It is a further object of some embodiments of the present invention to increase flexibility of use, simplicity, rigidness, operational safety and durability of such a lightning current transfer system, especially for use in a wind turbine generator brought into offshore operation. Moreover, it is an object of some embodiments of the present invention to provide for a wind turbine generator comprising a lightning current transfer system by which the afore-mentioned objects are achieved.

This object is achieved by a lightning current transfer system for a wind turbine generator, the wind turbine generator comprising a rotor, the rotor including a hub, a blade bearing, a blade, and a spinner; the wind turbine generator further comprising a nacelle; wherein the blade is rotatable relative to the hub and the hub is rotatable relative to the nacelle. The lightning current transfer system comprises a first electrical contact arrangement including first and second complementary contact members, the first contact member being supported at the blade and being in electrical connection with a blade conductor arrangement arranged on the blade, the second contact member being supported at the hub, the spinner or the blade bearing. The first and the second contact members are arranged to be electrically connectable to each other. The lightning current transfer system further comprises conducting means connected to the first electrical contact arrangement. A second electrical contact arrangement is connected to the conducting means and includes third and fourth complementary contact members, the third contact member being supported at the hub, the spinner or the blade bearing, and the fourth contact member being supported at the nacelle. The third and the fourth contact members are arranged to be electrically connectable to each other.

This way, the lightning current transfer system provides a current path for a lightning current from the blade to the nacelle, the current path including the first electric contact arrangement, the conducting means and the second electric contact arrangement. The first contact member is arranged in a predetermined distance from a blade root of the blade, said blade root being mounted to the hub by means of the blade bearing. Further, the first contact member is formed as a discharge ring being connected to the blade conductor arrangement, the blade conductor arrangement being formed by a metal foil or a metal mesh extending over at least a part of a longitudinal extension of the blade.

In addition, the lightning current transfer system is disposed outside of the hub and inside of the spinner and/or inside of the nacelle, and the conducting means is mounted stationarily at a mounting member. The mounting member is supported at the spinner, the hub or the blade bearing or is formed by the spinner, the hub or the blade bearing.

The construction according to some embodiments of the present invention allows for the parts of the lightning current transfer system for the wind turbine generator to be arranged in a way such that on the one hand a reliable weather-protection is achieved and on the other hand a sufficient distance is kept between said parts of the lightning current transfer system on the one side and the hub, the blade bearings, so-called main bearings by which the hub is supported in the nacelle, as well as other machinery inside the hub and the nacelle on the other side. The construction is simple and rigid as well. Thus, a reliable lightning protection is achieved, at the same time avoiding the above-mentioned problems with moisture or ice from precipitation and resulting corrosion. This makes the lightning current transfer system weatherproof especially against impacts caused by salt water. Therefore, the lightning current transfer system according to the embodiments of the present invention is preferably suitable for offshore use on wind turbine generators.

By the embodiments of the present invention, an effective protection of the wind turbine generator from damage caused by lightning is achieved. Further flexibility of use, compactness, simplicity, rigidness, operational safety and durability of the lightning current transfer system are increased, especially for use in offshore wind turbine generators.

According to a further embodiment of the present invention, in the lightning current transfer system the conducting means is mounted stationarily at the mounting member for at least 50 percent of its entire length. By this means, rigidness of the construction is provided, preventing the conducting means from accidentally working loose or being destroyed somehow. An even more rigid and reliable construction is achieved in case the conducting means is mounted stationarily at the mounting member for at least 75 percent of its entire length, or, even more preferably, in particular for at least 90 percent. Further preferably, the conducting means is mounted stationarily at the mounting member for its entire length.

In a further embodiment of the lightning current transfer system, the first contact member comprises a first electrically conducting slideway, and the second contact member comprises a first lumped contacting means, or one of the third and fourth contact members comprises a second lumped contacting means, and the other one of the third and fourth contact members comprises a second electrically conducting slideway.

In this context, the term "lumped contacting means" is used for contact means having a compact or concentrated shape that is not spread or extending. In this feature, a difference finds expression between the contact means in concern in contrast to a slideway, as such a slideway generally is spread or extending over a considerable distance to allow for a contacting along this distance. Preferably, the discharge ring at the blade has the function of the first electrically conducting slideway, which allows for a simple, low-cost and rigid construction.

In a further embodiment of the lightning current transfer system, the first or the second lumped contacting means include a sliding contact, a spark gap, a brush or a roller arrangement. These advantageous embodiments of lumped contacting means are preferred examples for circumscribing the term "lumped contacting means", and provide for a simple, rigid, effective and wear-resistant construction.

According to another embodiment of the present invention, a transport member for enabling a movement along a predetermined path between the first or the second lumped contacting means and the corresponding first or second electrically conducting slideway is provided, the transport member comprising at least one roller adapted to roll along the first or the second electrically conducting slideway, the first or the second lumped contacting means being mounted to the transport member.

Such a transport member may preferably be constructed in form of a truck member running on and guided by a circular guiding rail portion, by which circular guiding rail portion said predetermined path between the first or the second lumped contacting means and the corresponding first or second electrically conducting slideway is defined. Said circular guiding rail portion preferably may be formed directly by the first or second electrically conducting slideway.

This construction allows for a definite position of said contacting means one to another, preferably in case the first or second electric contact arrangement, respectively, are constructed in form of a spark gap, in which case the transport member advantageously is provided with a spark gap electrode facing the first or second electrically conducting slideway serving as circular guiding rail portion. Such, even in case of deviations, dimensional imperfections, work tolerances or dimensional tolerances of the hub, the blade, the blade bearing, the spinner or the nacelle, the accuracy to size of the spark gap is guaranteed.

In another embodiment of the lightning current transfer system, wherein the wind turbine generator further comprises a main bearing support arrangement, said main bearing support arrangement comprising bearing support components from the group of main bearing housing, brake mounting means or a caliper supported by brake mounting means, one of the third and fourth contact members is supported by one of the bearing support components.

The main bearing support arrangement of the wind turbine generator is provided for supporting a main shaft or a comparable portion of the wind turbine generator, to which portion the hub is mounted, at least the hub being rotated together with said portion during operation of the wind turbine generator. Especially, main bearing support arrangement comprises and supports said main bearings by which the hub is supported in the nacelle. Said bearing support components as listed beforehand may be arranged on the hub or on the nacelle to choice.

As the main bearing support arrangement necessarily is designed as a very rigid construction for absorbing the forces caused by the wind and acting on the hub and the blades of the wind turbine generator, mounting said third or fourth contact members to the bearing support components allows for a simple, rigid, cost- and weight-saving construction.

According to a further embodiment of the present invention, the lightning current transfer system comprises at least one non-conducting roller, the non-conducting roller comprising non-conducting material, preferably long-term life cycle non-conducting material such as ceramic. This in a simple manner ensures safe function especially in case the first or the second lumped contacting means is provided with a spark gap. However, in a variation of this embodiment, the first or the second lumped contacting means may also comprise at least one conducting roller to achieve electrical connection. This is especially preferred in case the third or fourth contact means comprises the at least one conducting roller.

Advantageously, in the lightning current transfer system according to another embodiment of the present invention the third contact member comprises a brush connected to a first holding device, the first holding device being supported by the hub, the spinner or the blade bearing, and the second contact member comprises a brush connected to a second holding device, the second holding device being supported by the hub, the spinner or the blade bearing, wherein the first and second holding devices form a bracket-shaped member each, the bracket-shaped members being connected to each other forming the mounting member at which the conducting means is stationarily mounted, the second and third contact member thereby facing each other, the second and third contact member being located at approximately the same distance from a rotation axis of the rotation of the hub relative to the nacelle" the second and third contact member being spring loaded against each other towards the first and fourth contact member, respectively.

This embodiment allows for a particularly compact, simply constructed, light-weight and rigid configuration. As an example for the simplicity of the construction it may be mentioned that only one spring is needed to spring-load both the second and the third contact member for being pressed against their respective complementary contact members. As a further example, the particularly simple construction of the holding devices may be mentioned.

In a further embodiment of the lightning current transfer system, the third contact member comprises a brush connected to a first holding device, and the second contact member comprises a brush connected to a second holding device, wherein the first and second holding devices form a bracket-shaped member each, the bracket-shaped members being connected to each other forming the mounting member at which the conducting means is stationarily mounted, the second and third contact member thereby facing each other, the second and third contact member being located at approximately the same distance from a rotation axis of the rotation of the hub relative to the nacelle" the second and third contact member being spring loaded against each other towards the first and fourth contact member, respectively. Additionally, said first and second holding devices are supported by a first post-like member, the post-like member being supported at the hub, the spinner or the blade bearing, the post-like member being arranged at least substantially parallel to the direction of a rotation axis of the rotation of the blade relative to the hub.

By means of said first post-like member, preferably in case the first post-like member is directed at least substantially radially outwardly from inside the hub in the direction of a tip of the blade, the second and third contact members, in the configuration in which they are facing each other being located at approximately the same distance from a rotation axis of the rotation of the hub relative to the nacelle between the first and the fourth contact member, may preferably be shifted outwardly to an outermost position where they may still be weather-protected especially by portions of the spinner or the nacelle, however, a maximum distance with respect to the portions of the wind turbine generator to be lightning-protected is achievable. Preferably, the first post-like member at least partly is made from non-conducting material.

While in the embodiments of the present invention as described beforehand, both second and third contact members are arranged equidistantly from the inside of the hub, according to another preferred embodiment wherein the third contact member comprises a brush connected to a first holding device, and wherein the second contact member comprises a brush connected to a second holding device, the first and second holding devices now are supported by a second post-like member, the second post-like member being supported at the hub, the spinner or the blade bearing, the second post-like member being arranged at least substantially parallel to the direction of a rotation axis of the rotation of the blade relative to the hub. In this manner, the first and second holding devices and the second post-like member form the mounting member at which the conducting means is stationarily mounted. Furthermore, in this embodiment the second contact member is located at a larger distance from a rotation axis of the rotation of the hub relative to the nacelle than the third contact member, and said conducting means electrically connecting said first and second electrical contact arrangements to each other is arranged at or combined with the second post-like member. The second post-like member thus may comprise conducting portions forming said conducting means. In a variation of this embodiment, the second post-like member is non-conducting, and said conducting means is attached to said second post-like member. Preferably, the first and the second post-like member comprise fibre reinforced plastic.

By means of the foregoing embodiment, two advantages are achieved: As a first advantage, the second contact member is arranged in a sufficient distance from the blade bearing and the hub, thus saving the blade bearing and the hub from being impacted by lightning currents. As a second advantage, the third contact member is arranged as near as possible to the rotation axis of the rotation of the hub relative to the nacelle, thus achieving a lower circumferential speed of the third contact member, that is a lower relative speed between the third and the fourth contact member, thus minimizing wear of said third and fourth contact members. Further preferably, the distance of the second contact member to the rotation axis of the hub is at least two times, especially preferably three times, the distance of the third contact member to the hub rotation axis.

According to another embodiment of the lightning current transfer system, wherein the third contact member comprises a brush connected to a first holding device, and the second contact member comprises a brush connected to a second holding device, the first and second holding devices are adapted to form the conducting means.

In this manner, a particularly simple, light-weight, cost-saving, rigid and efficient construction is achieved.

In another embodiment of the lightning current transfer system, the conducting means is integrated into an outer part of the spinner by means of being arranged in an isolating part of the spinner. The isolating part of the spinner is thus forming the mounting member at which the conducting means is stationarily mounted, wherein the conducting means is at least partly surrounded by material from which the spinner is formed.

This construction is especially preferred in case at least a portion of the spinner at the location of the conducting means is made of glass-fibre reinforced plastic material, hereinafter abbreviated as GFRP. Preferably, the conducting means is placed in the GFRP during fabrication by surrounding the conducting means with the resin and the fibre glass mats used for building the GFRP.

By means of this embodiment a rigid and cost-saving solution is achieved that safely keeps the conducting means in a definite position at the spinner and saves the conducting means from corrosion and damage. Further, in case the second and third contact members comprise holding devices, these holding devices may also partly or completely be integrated into said isolating outer part of the spinner, increasing rigidness, weather-protection and durability of the construction. Furthermore, as in this case no separate mounting means for mounting the conducting means or said holding devices to the spinner are necessary, simplicity of the lightning current transfer system is increased.

In another embodiment of the lightning current transfer system, the spinner, preferably the spinner in total, is made of non-conducting material, preferably of GFRP. This embodiment is preferred for achieving a light-weight construction and ensures electric isolation of the spinner.

According to another embodiment of the lightning current transfer system, the conducting means is made of metal. Compared to, for instance, conducting plastics or other conducting material, by this means a simple and rigid construction is provided having excellent conductivity and aging behaviour especially in view of impacts caused by weather influences like salt water, wind forces and sun radiation.

In another embodiment of the lightning current transfer system, the conducting means extends along a straight line between the second contact member and the third contact member. This not only ensures a simple and rigid construction, but further provides for a high conductivity and thus for a high efficiency of the lightning current path to be formed by the lightning current transfer system, and further prevents lightning currents from being unnecessarily led to the vicinity of portions of the wind turbine to be protected against lightning currents.

In another embodiment of the lightning current transfer system, a portion of the metal foil or the metal mesh by which the blade conductor arrangement is formed facing the discharge ring is mounted between two metal plates, preferably by riveting, the metal foil or the metal mesh being connected to the discharge ring by bolts penetrating the discharge ring, the metal foil or the metal mesh and the metal plates.

By these measures, a tight and rigid mechanical and at the same time electrical connection is provided, especially in view of the blade made from GFRP, so that different types of material have to be joined. The assembly described can be mounted easily and simply even by use of simple tools and under building-site conditions.

In another embodiment of the lightning current transfer system, bushings are arranged between the metal foil or the metal mesh and the metal plates on the one hand and the discharge ring on the other hand, the bushings being adapted to form an electrical connection between the discharge ring and the metal foil or the metal mesh.

Said bushings increase the contact surface between the metal foil or the metal mesh and the metal plates on the one hand and the discharge ring on the other hand, and thus improve the electrical contact between the blade conductor arrangement and the discharge ring, as a current path between the blade conductor arrangement and the discharge ring is not only limited and concentrated to the contact provided by said bolts.

In a further embodiment of the lightning current transfer system, the bushings are welded to the discharge ring or to one of the metal plates facing the discharge ring, or the bushings are bolted, preferably by means of being penetrated by the bolts, to the discharge ring or one of the metal plates facing the discharge ring.

Preferably, if the bushings are welded to the one of the metal plates facing the discharge ring, besides the improvement of the electrical contact between the bushings and said metal plate, the bushings advantageously may be pre-mounted, especially during pre-manufacture of the blade, by which means the installation of the wind turbine is simplified, thus making the personnel's work at the building-site easier.

Moreover, arranging the bushings in a manner so as to being penetrated by the bolts provides for a particularly improved and uniform electrical contact and distribution of mechanical tension in the discharge ring, the metal foil or the metal mesh and the metal plates and portions of the blade material intermediately disposed between afore-mentioned construction parts.

Further, in combination of the features described beforehand, it is also possible to both weld and bolt the bushings, by which means the advantages described are cumulated. This results in a further improvement of rigidness and reliability of the described construction.

In a further embodiment of the lightning current transfer system, the distance between the discharge ring and the blade root is predetermined so as to prevent electrical spark-over from the discharge ring to the hub or to blade connection means, preferably said distance is predetermined to be between 0.2 meter and 1 meter, further preferably between 0.3 and 0.7 meter and especially preferably between 0.4 and 0.6 meter.

By this means, an effective lightning protection of the wind turbine and the machinery thereof, especially the hub, the bearings, particularly the main bearing support arrangement, the generators and other electric and electronic equipment comprised in the wind turbine, is provided for. Lightning currents are effectively prevented from flowing through the inner parts of the wind turbine, preventing said parts of the wind turbine generator from being damaged by lightning currents caused by a spark-over from the blade to the hub.

### Brief Description of Drawings

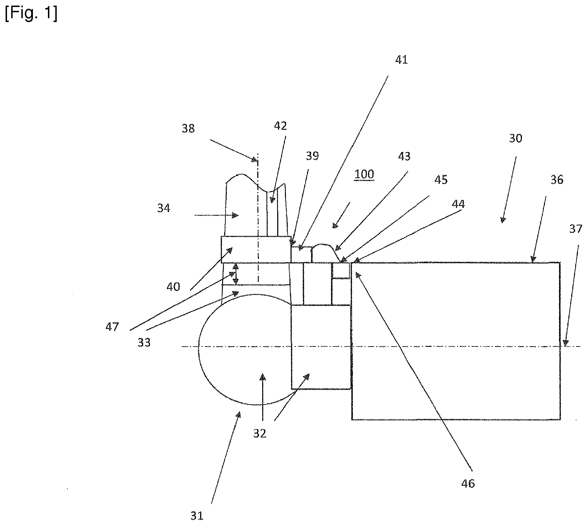

Embodiments of the invention will be described hereinafter in more detail with reference to the following drawings, in which drawings is shown in schematic representation in
[fig.1]Figure 1 is a presentation of main parts of an embodiment of a wind turbine generator in rough outline;
[fig.2]Figure 2 is a simplified, first, vertical longitudinal cross-section of an embodiment of a centre portion of a rotor head and of an adjacent portion of a nacelle of a wind turbine generator according to Figure 1, seen in a first viewing direction as a side view perpendicular to the section plane of said first, vertical longitudinal cross-section, in which presentation construction parts of the wind turbine generator being not relevant in context with the present invention have been omitted;

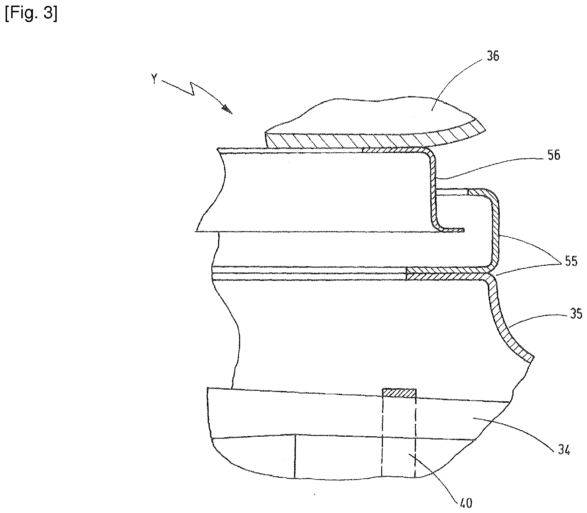

[fig.3]Figure 3 is a detail of said view of said simplified, first, vertical longitudinal cross-section of the embodiment of the centre portion of the rotor head and of the adjacent portion of the nacelle of the wind turbine generator according to Figure 2, the detail being denoted by reference sign "Y" in Figure 2 and seen in said first viewing direction as well;

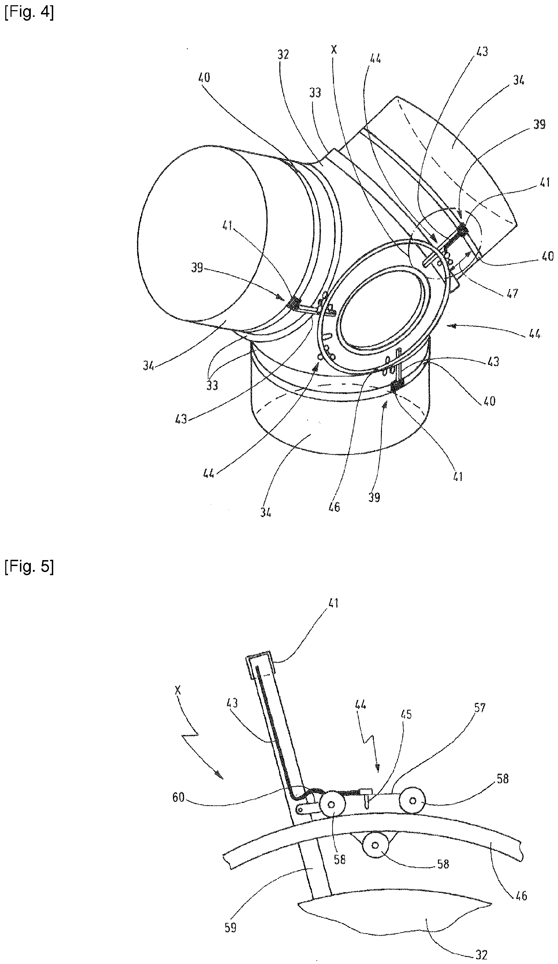

[fig.4]Figure 4 is a perspective view of the hub and parts of rotor blades according to the embodiment of the centre portion of the rotor head and of an adjacent construction part of the nacelle of the wind turbine generator as shown in Figure 2, seen in a second viewing direction relative to said section plane of said first, vertical longitudinal cross-section partly from a rear side of the hub, said rear side of the hub facing the nacelle, partly from the top of the wind turbine generator; in which presentation construction parts of the wind turbine generator being not relevant in context with the present invention have been omitted;
[fig.5]Figure 5 is a detail of the hub according to the embodiment of the centre portion of the rotor head and of the adjacent construction part of the nacelle of the wind turbine generator as shown in Figure 4, seen in a third viewing direction as a rear view perpendicular to said first viewing direction and along the section plane of said first, vertical longitudinal cross-section parallel to a rotation axis of the rotation of the hub relative to the nacelle, the detail being denoted by reference sign "X" in Figure 4;

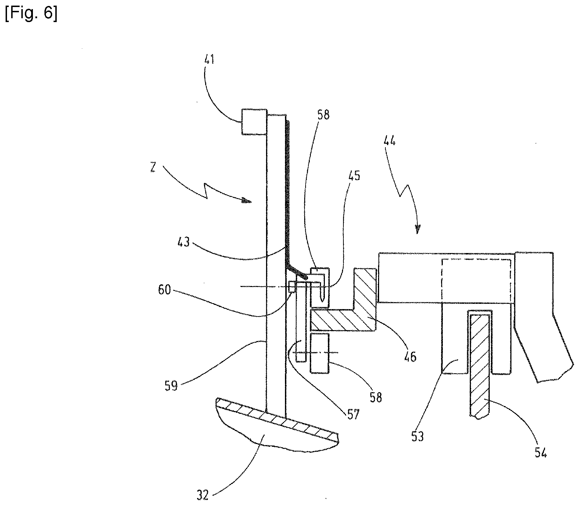

[fig.6]Figure 6 is the detail of the hub according to the embodiment of the centre portion of the rotor head and of the adjacent construction part of the nacelle of the wind turbine generator as shown in Figure 2 and 4, seen in said first viewing direction of Figure 2 as a side view perpendicular to the section plane of said first, vertical longitudinal cross-section; the detail being denoted by reference sign "Z" in Figure 2; the detail being shown beforehand in Figure 5 in said third viewing direction as well; the Figures 2, 4, 5 and 6 comprising a first embodiment of a lightning current transfer system;

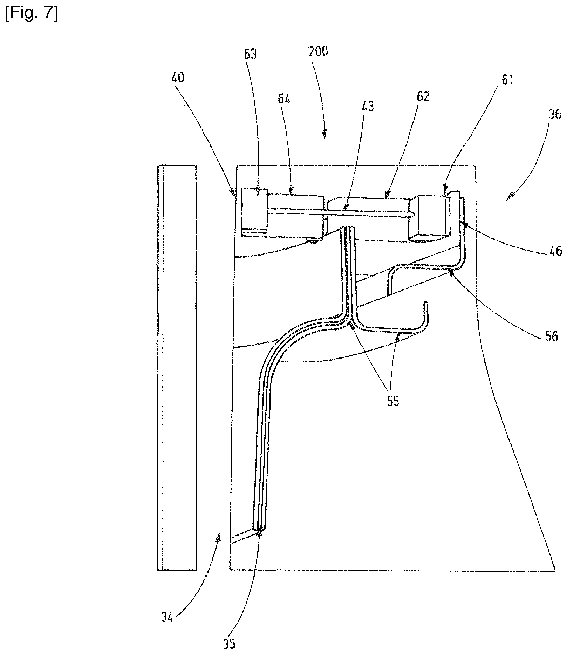

[fig.7]Figure 7 is a first perspective view of said detail of said view of said simplified, first, vertical longitudinal cross-section of the embodiment of the centre portion of the rotor head and of the adjacent portion of the nacelle of the wind turbine generator according to Figure 2, the detail being shown beforehand in Figure 3 and being denoted by reference sign "Y" in Figure 2, the detail furthermore seen in a fourth viewing direction from left below relative to said first viewing direction; Figure 7 further comprising a second embodiment of a lightning current transfer system;

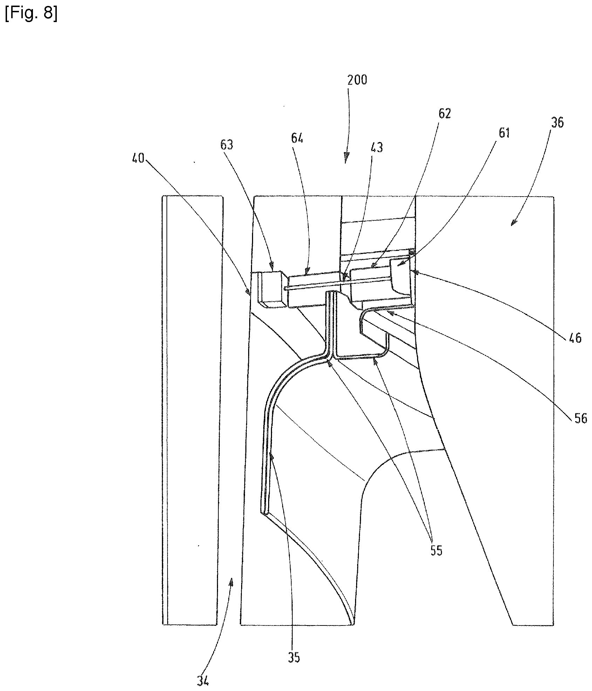

[fig.8]Figure 8 is a second perspective view of the second embodiment of the lightning current transfer system as shown in Figure 7, seen in a fifth viewing direction from right below relative to said first viewing direction;

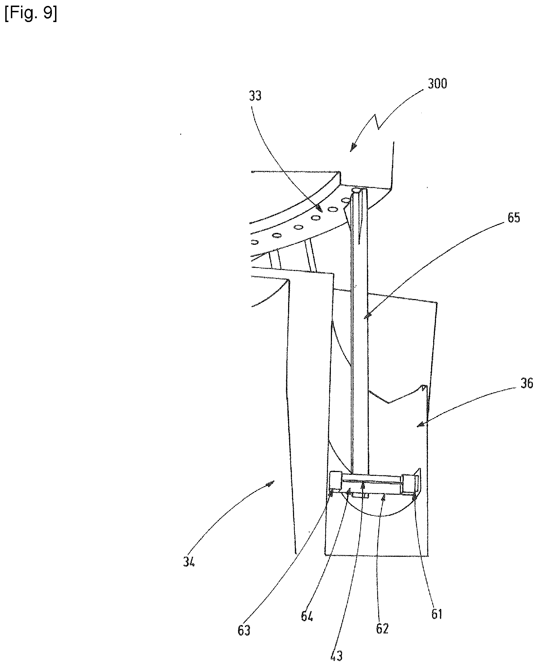

[fig.9]Figure 9 is a first perspective view of a variation of said detail of said view of said simplified, first, vertical longitudinal cross-section of the embodiment of the centre portion of the rotor head and of the adjacent portion of the nacelle of the wind turbine generator according to Figure 2, the detail being shown beforehand in Figure 3 and being denoted by reference sign "Y" in Figure 2, said variation of said detail as shown beforehand in Figure 3 being furthermore seen in said fourth viewing direction from left below relative to said first viewing direction; Figure 9 further comprising a third embodiment of a lightning current transfer system;

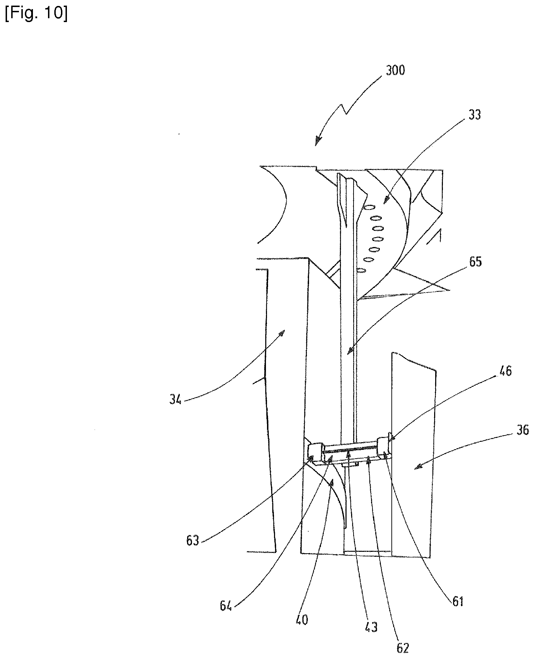

[fig. 10] Figure 10 is a second perspective view of the third embodiment of the lightning current transfer system as shown in Figure 9, seen in said fifth viewing direction from right below relative to said first viewing direction;

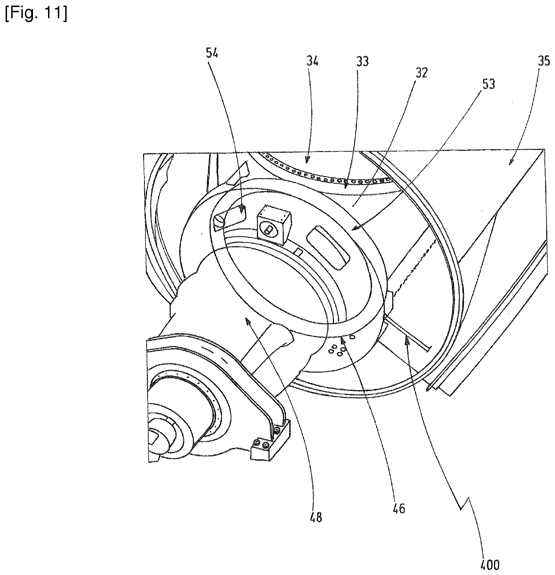

[fig. 11]Figure 11 is a perspective view of the embodiment of the centre portion of the rotor head and of an adjacent construction part of the nacelle of the wind turbine generator according to Figure 2, seen in a sixth viewing direction relative to said section plane of said first, vertical longitudinal cross-section partly from a rear side of the hub, said rear side of the hub facing the nacelle, partly from the top of the wind turbine generator; said sixth viewing direction being mirror-inverted with respect to said section plane of said first, vertical longitudinal cross-section; in which presentation construction parts of the wind turbine generator being not relevant in context with the present invention have been omitted; Figure 11 further comprising a fourth embodiment of a lightning current transfer system;

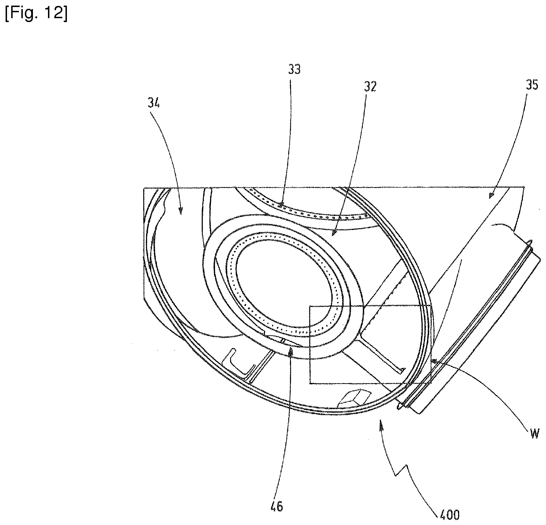

[fig. 12] Figure 12 is the perspective view of Figure 11 comprising the fourth embodiment of the lightning current transfer system, seen in said sixth viewing direction as well, where those portions of the nacelle shown in Figure 11 have been omitted additionally;

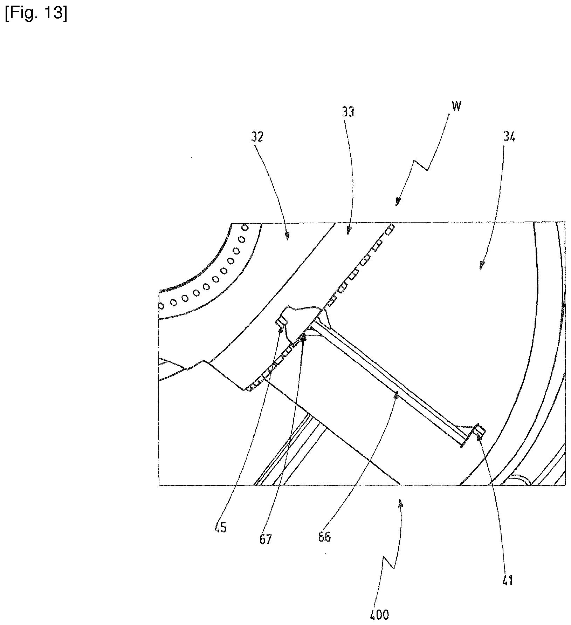

[fig. 13]Figure 13 is a detail of said perspective view of Figure 12 comprising the fourth embodiment of the lightning current transfer system, the detail being denoted by reference sign "W" in Figure 12 and seen in said sixth viewing direction as well;

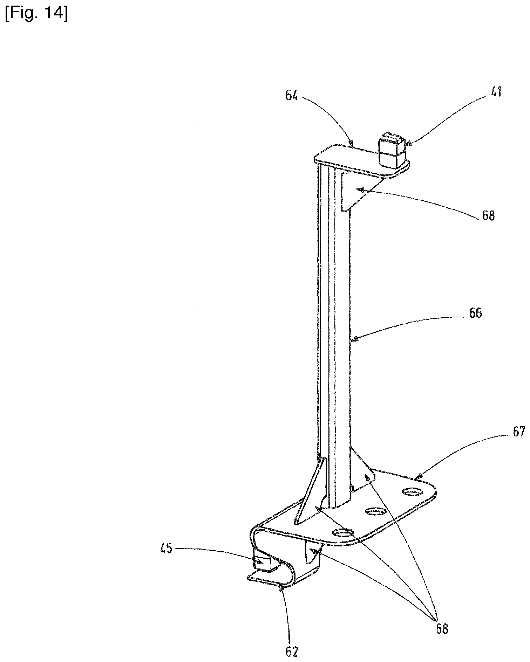

[fig. 14] Figure 14 is a perspective view of the fourth embodiment of the lightning current transfer system as shown in Figures 11, 12 and 13, seen in a seventh viewing direction;

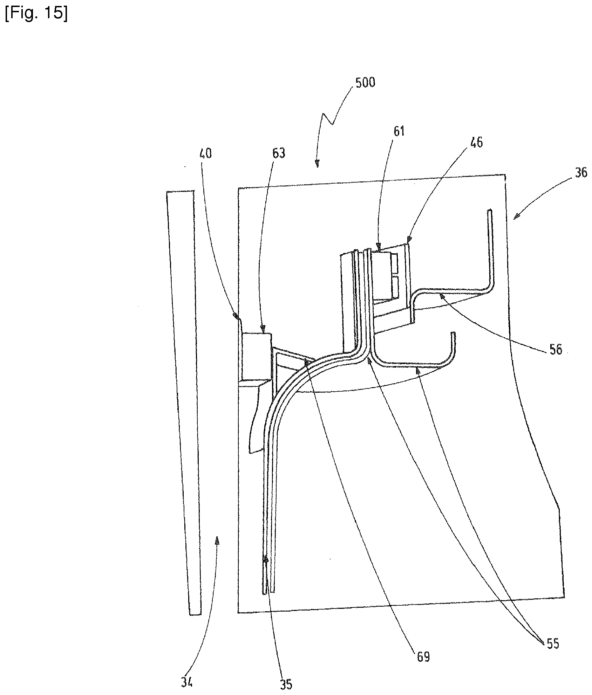

[fig.15]Figure 15 is a first perspective view of said detail of said view of said simplified, first, vertical longitudinal cross-section of the embodiment of the centre portion of the rotor head and of the adjacent portion of the nacelle of the wind turbine generator according to Figure 2, the detail being shown beforehand in Figure 3 and being denoted by reference sign "Y" in Figure 2, the detail being furthermore seen in said fourth viewing direction from left below relative to said first viewing direction; Figure 7 further comprising a fifth embodiment of a lightning current transfer system;

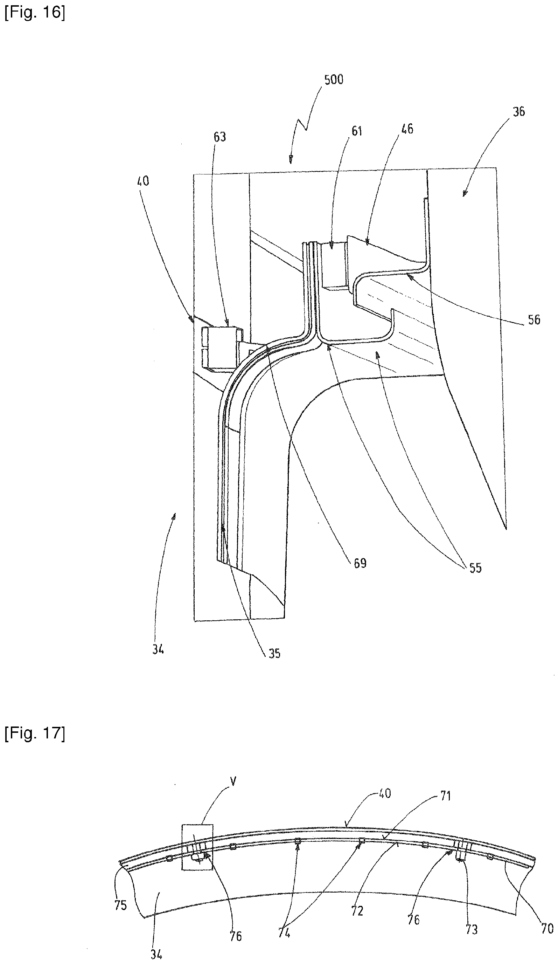

[fig. 16] Figure 16 is a second perspective view of the fifth embodiment of the lightning current transfer system as shown in Figure 15, seen in said fifth viewing direction from right below relative to said first viewing direction;
[fig. 17]Figure 17 is a radial cross-section of a portion of a rotor blade showing an embodiment of a connection between a discharge ring, a portion of a metal mesh or metal foil forming a part of a blade conductor arrangement, and metal plates; the radial cross-section being seen in an eighth viewing direction at least substantially parallel to the direction of a rotation axis of the rotation of the blade relative to the hub;

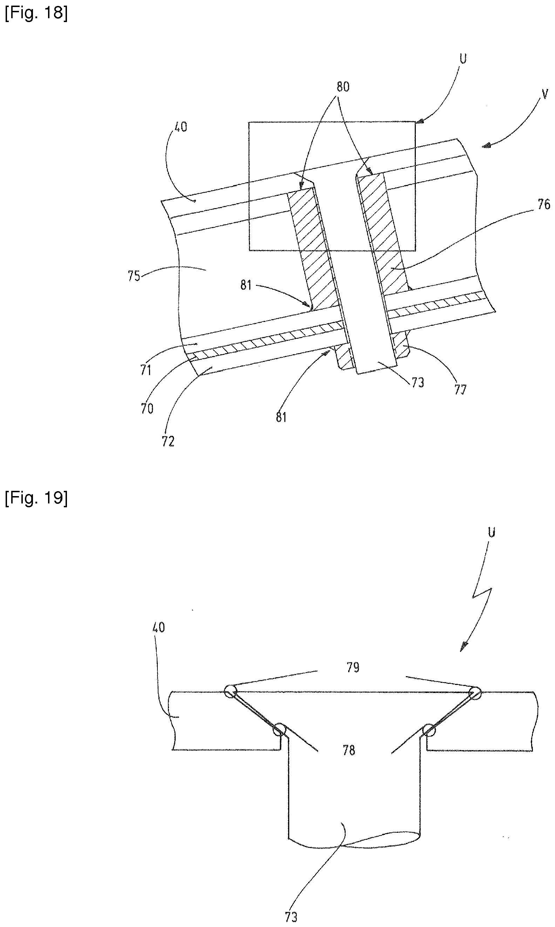

[fig.18]Figure 18 is a detail of the embodiment of the connection between the discharge ring, the portion of the metal mesh or metal foil forming a part of a blade conductor arrangement, and the metal plates, according to Figure 17, establishing said connection by means of a bushing; said detail being denoted by reference sign "V" in Figure 17, the detail furthermore being seen in said eighth viewing direction; and
[fig. 19] Figure 19 is a further detail of the detail of the embodiment of the connection between the discharge ring, the portion of the metal mesh or metal foil forming a part of a blade conductor arrangement, and the metal plates, according to Figure 17, said detail shown in Figure 18; said further detail being denoted by reference sign "U" in Figure 18, the further detail furthermore being seen in said eighth viewing direction.

### Description of Embodiments

Figure 1 in rough outline shows a presentation of main parts of an embodiment of a wind turbine generator 30 comprising a lightning current transfer system 100 according to an embodiment of the present invention. The wind turbine generator 30 further comprises a rotor 31 including a hub 32, a blade bearing 33 mounted to the hub 32, a blade 34 mounted to the hub 32 by means of the blade bearing 33, and a spinner mounted to and surrounding the hub 32 and the blade bearing 33. For sake of clarity, the spinner is not explicitly shown in Figure 1, but will be presented in context of some of the following Figures and denoted there by reference numeral 35.

The wind turbine generator 30 in Figure 1 further comprises a nacelle 36, the rotor 31 being supported by the nacelle 36 and being rotatable relative to the nacelle 36 around a rotation axis 37 of the rotation of the hub 32 relative to the nacelle 36. Further, the blade 34 is rotatable relative to the hub 32 around a rotation axis 38 of the rotation of the blade 34 relative to the hub 32.

The lightning current transfer system 100 according to Figure 1 comprises a first electrical contact arrangement 39 including first and second complementary contact members 40, 41, respectively. The first contact member 40 is supported at the blade 34 and is in electrical connection with a blade conductor arrangement 42 arranged on the blade 34. The second contact member 41 in this embodiment is supported at the hub 32; however, in a variation of this embodiment, the second contact member 41 may also preferably be supported at the spinner 35 or the blade bearing 33. The first and the second contact members 40, 41 are electrically connected to each other.

In the arrangement according to Figure 1, further a conducting means 43 is provided being connected at a first end thereof to the second contact member 41 of the first electrical contact arrangement 39. A second electrical contact arrangement 44 is provided being connected to a second end of the conducting means 43 and including third and fourth complementary contact members 45, 46, respectively, of which contact members 45, 46 the third one denoted by reference numeral 45 performs the connection between the conducting means 43 and the second electrical contact arrangement 44. In this configuration, the third contact member 45 is supported at the hub 32; however, in a variation of this embodiment, the third contact member 45 may also preferably be supported at the spinner 35 or the blade bearing 33, respectively. Further, the fourth contact member 46 is supported at the nacelle 36, and the third and the fourth contact members 45, 46 are arranged to be electrically connected to each other.

By this means, the lightning current transfer system 100 provides a current path for a lightning current from the blade 34 to the nacelle 36, the current path including the first electric contact arrangement 39, the conducting means 43 and the second electric contact arrangement 44. The first contact member 40 in this configuration is arranged in a predetermined distance 47 from a blade root of the blade 34, said blade root being mounted to the hub 32 by means of the blade bearing 33.

Furthermore, in the arrangement of Figure 1 the first contact member 40 is formed as a discharge ring being connected to the blade conductor arrangement 42. As will be discussed in more detail hereinafter, the blade conductor arrangement 42 is formed by a metal foil or a metal mesh extending over at least a part of a longitudinal extension of the blade 34.

In Figure 2, a simplified, first, vertical longitudinal cross-section of a more detailed presentation of an embodiment of a centre portion of a rotor head of the rotor 31 and of an adjacent portion of the nacelle 36 of the wind turbine generator 30 according to Figure 1 is shown, seen in a first viewing direction as a side view perpendicular to the section plane of said first, vertical longitudinal cross-section, that is in the same viewing direction as in Figure 1. In this presentation, however, construction parts of the wind turbine generator 30 being of no relevance in context with the present invention have been omitted. Elements already described in the foregoing are again denoted by the same reference numerals. This is maintained throughout all Figures and the related text parts.

The wind turbine generator 30 of Figure 2 further comprises a main bearing support arrangement 48. The main bearing support arrangement 48 comprises a number of bearing support components. As a first one of these bearing support components, a main bearing housing 49 is provided, supported in the nacelle 36. For the sake of clarity of the drawings, details about the supporting of the main bearing housing 49 in the nacelle 36 are omitted in Figure 2. The main bearing support arrangement 48 further comprises a brake mounting means 50, by which means a braking arrangement for braking the rotor 31, for example in order to stop the rotor 31 in case this may be required for the purpose of maintenance, is mounted to the main bearing housing 49 and thus supported in the nacelle 36.

The main bearing support arrangement 48 of the wind turbine generator 30 is provided for supporting a main shaft 51 of the wind turbine generator 30, to which main shaft 51 the hub 36 is mounted. The hub 36 together with the main shaft 51 is rotated during operation of the wind turbine generator 30. To this purpose, the main bearing support arrangement 48 as a second one of said bearing support components comprises and supports main bearings 52 within the main bearing housing 49, by which main bearings 52 the hub 36 is supported in the main bearing housing 49, that is in the main bearing support arrangement 48 and thus in the nacelle 36.

The braking arrangement mentioned beforehand and adapted for braking the rotor 31 comprises a caliper 53 supported by the brake mounting means 50. A brake disk 54 is supported by the main shaft 51 concentrically to the rotation axis 37 of the rotation of the hub 32 relative to the nacelle 36 and is rotatable with the main shaft 51 and the hub 32, the brake disk 54 being in engagement with the caliper 53.

Said bearing support components as listed beforehand may be arranged on the hub 32 or on the nacelle 36 to choice. As will be described in more detail hereinafter, in a preferred embodiment of the lightning current transfer system 100, one of the third and fourth contact members 45, 46, respectively, is supported by one of the described bearing support components. This arrangement is comprised in the detail denoted by "Z" in Figure 2, which detail "Z" is shown in Figure 5 and is described more closely in context with the Figures 4 to 6.

Another detail of Figure 2 denoted by reference sign "Y" is shown in Figure 3. In this Figure, the blade 34, the first contact member 40 in the form of the discharge ring, the nacelle 36, and the spinner 35 are partly shown. A space between a front portion of the nacelle 36 facing towards the hub 32 and the rear portion of the hub 32 facing the nacelle as well as the blade 34 is surrounded by the spinner 35; the spinner 35 thus forming a weather-protection for the hub 32, the blade 34 and the front portion of the nacelle 36 as well as for the machinery inside the hub 32 and the nacelle36. To this purpose, an edge portion 55 of the spinner 35 and rotating together with the hub 32 on one side and a collar-shaped member 56 attached to the nacelle 36 acting as a form of a sealing cuff on the other side intermesh with one another to effectively keep off moisture and dirt.

Figure 4 shows a perspective view of the hub 32 and parts of rotor blades 34 according to the embodiment of the centre portion of the rotor head and of an adjacent construction part of the nacelle 36 of the wind turbine generator 30 of Figure 2, seen partly from the rear side of the hub 32, partly from the top of the wind turbine generator 30. Again, this is a simplified presentation omitting construction parts of the wind turbine generator 30 being not relevant in context with the present invention.

In Figure 4, a first embodiment of the lightning current transfer system 100 is shown in more detail. In this first embodiment of the lightning current transfer system 100 the first contact member 40 is formed as a first electrically conducting slideway provided by the discharge ring as mentioned above, and the second contact member 41 comprises a first lumped contacting means, preferably a brush, a slider or a contacting roller. Further, the third contact member 45 comprises a second lumped contacting means, and the fourth contact member 46 comprises a second electrically conducting slideway. This slideway is also shown in Figure 2 and is supported at the brake mounting means 50 in the nacelle 36 concentrically to the rotation axis 37 of the rotation of the hub 32 relative to the nacelle 36, the slideway 46 being in a fixed position with the nacelle 36, whereas the second and third contact members 41, 45 both are supported at the hub 32, thus being rotated around the rotation axis 37 of the rotation of the hub 32 relative to the nacelle 36 and thus being rotatable with the main shaft 51 and the hub 32.

From Figure 4 it further becomes evident that for the wind turbine generator 30 described one lightning current transfer system 100 according to the first embodiment of the present invention has to be provided for one blade 34 each. Such, as according to Figure 4 three blades 34 are arranged at the hub 32, for this embodiment of the wind turbine generator 30 consequently three lightning current transfer systems 100 are provided.

A more detailed view of the second electrical contact arrangement 44 of the first embodiment of the lightning current transfer system 100 is shown in Figures 5 and 6. Figure 5 shows a detail of the hub 32 according to the present embodiment, seen as a rear view parallel to the rotation axis 37 of the rotation of the hub 32 relative to the nacelle 36, the detail being denoted by reference sign "X" in Figure 4. Figure 6 shows a view of the second electrical contact arrangement 44 according to the present embodiment, seen as the detail denoted by reference sign "Z" in Figure 2.

The second electrical contact arrangement 44 according to the present embodiment is formed as a transport member 57 for enabling a movement along a predetermined path between the second lumped contacting means, that is the third contact member 45, and the corresponding second electrically conducting slideway forming the fourth contact member 46. The transport member 57 comprises three rollers 58 adapted to roll along the second electrically conducting slideway 46, the transport member thus forming a truck member. The second lumped contacting means, that is the third contact member 45, in this embodiment is formed as a spark gap electrode being mounted to the transport member 57. By means of the transport member 57, the spark gap electrode 45 is guided along the second electrically conducting slideway 46 keeping a definite distance between the spark gap electrode 45 and the conducting slideway 46. The conducting slideway 46 in this first embodiment is also denoted as a spark gap rail.

The spark gap electrode 45 supported at the transport member 57 is further electrically connected to the conducting means 43. The transport member 57 further is movably coupled to a support means 59, especially by means of a knuckle or an elastic coupling 60, in order to be adapted for compensating of deviations from circularity of the spark gap rail 46. The support means 59 on the other hand is attached to the hub on the outside thereof. By this support means 59, the transport member 57 is held in position on the spark gap rail 46 and forced to rotate with the hub 32.

Further, in this arrangement, the conducting means 43 is stationarily mounted at the support means 59 in that manner that the support means 59 serves as a mounting member for the conducting means 43 as well. At an upper end thereof, the support means 59 is provided with the second contact member 41. The support means 59 is thus post-like shaped, that means it is shaped as a post-like member, wherein the second contact member 41 is located at a larger distance from a rotation axis 37 of the rotation of the hub 32 relative to the nacelle 36 than the third contact member 45.

By this means, the second contact member 41 on the one hand is arranged in a sufficient distance from the blade bearing 33 and the hub 32, thus saving the blade bearing 33 and the hub 32 from being impacted by lightning currents. On the other hand, the third contact member 45 is arranged as near as possible to the rotation axis 37 of the rotation of the hub 32 relative to the nacelle 36, thus achieving a lower circumferential speed of the third contact member 45, that is a lower relative speed between the third and the fourth contact member 45, 46, respectively, thus minimizing wear of said third and fourth contact members 45, 46, respectively. Preferably, the distance of the second contact member 41 to the rotation axis 37 of the hub 32 is at least two times, especially preferably three times, the distance of the third contact member 45 to the hub rotation axis 37.

Further, in this embodiment, the conducting means 43 electrically connecting said first and second electrical contact arrangements 39, 44, respectively, to each other is arranged at or combined with the post-like shaped support means 59 for the transport member 57 of the second electrical contact arrangement 44. By this means, a stationary mounting of the conducting means 43 at the support means 59 serving as a mounting member is achieved. Though, preferably in the vicinity of the knuckle or elastic coupling 60, the conducting means 43 may be formed by an elastic cable, in total the conducting means 43 may be mounted stationarily at the support means 59 for at least 50 percent or more of its entire length, so that rigidness of the construction is provided, preventing the conducting means 43 from accidentally working loose or being destroyed somehow.

Preferably, the transport member 57, the rollers 58 and the support means 59 are made from non-conducting material to keep lightning currents off the hub 32. For the rollers 58, preferably long-term life cycle non-conducting material such as ceramic is used.

Figures 7 and 8 show a second embodiment of a lightning current transfer system 200. Particularly, Figures 7 and 8 show the same portion of the wind turbine generator 30 as presented beforehand in Figure 3 as the detail denoted by reference sign "Y".

In this second embodiment, the third contact member 45 comprises a brush 61 connected to a first holding device 62. The first holding device 62 is supported by the edge portion 55 of the spinner 35. Similarly, the second contact member 41 comprises a brush 63 connected to a second holding device 64. The second holding device 64 is supported by the edge portion 55 of the spinner 35 as well. The first and second holding devices 62, 64 form a bracket-shaped member each, the bracket-shaped members 62, 64 being connected to each other, thus forming a mounting member, the mounting member 62, 64 being connected to the edge portion 55 of the spinner 35. The second and third contact member 41, 45 thereby face each other and are located at approximately the same distance from a rotation axis 37 of the rotation of the hub 32 relative to the nacelle 36. Along a straight line between the second and third contact member 41, 45 and thus between the first and the fourth contact member 40, 46, respectively, preferably further the conducting means 43 is stationarily arranged at the mounting member 62, 64. The second and third contact member 41, 45 are spring loaded against each other towards the first and fourth contact member 40, 46, respectively. In the embodiment shown, a spring is provided for each of the second and third contact member 41, 45; however, in a variation of this embodiment, a single spring may spring-load both second and third contact members 41, 45.

Figures 9 and 10 show a third embodiment of a lightning current transfer system 300. Particularly, Figures 9 and 10 show the same portion of the wind turbine generator 30 as presented beforehand in Figure 3 as the detail denoted by reference sign "Y". Though in comparison with Figures 7 and 8 the image sector of Figures 9 and 10 is somewhat extended so as to vertically reach from the discharge ring 40 to the blade bearing 33, again the area is shown where the first and fourth contact members 40, 46, that is the slideways, are arranged. For the sake of simplicity of the drawings, the portions of the spinner 35 are omitted.

The arrangement of the lightning current transfer system 300 according to the third embodiment mainly equals that of the second embodiment. Again, the third contact member 45 comprises a brush 61 connected to a first holding device 62. Similarly, the second contact member 41 comprises a brush 63 connected to a second holding device 64. The first and second holding devices 62, 64 form a bracket-shaped member each, the bracket-shaped members 62, 64 being connected to each other forming a mounting member 62, 64 at which the conducting means 43 is stationarily mounted. The second and third contact member 41, 45 thereby face each other and are located at approximately the same distance from a rotation axis 37 of the rotation of the hub 32 relative to the nacelle 36. Along a straight line between the second and third contact member 41, 45 and thus between the first and the fourth contact member 40, 46, respectively, advantageously the conducting means 43 is arranged as mentioned before. The second and third contact member 41, 45 are spring loaded against each other towards the first and fourth contact member 40, 46, respectively. In the embodiment shown, a spring is provided for each of the second and third contact member 41, 45; however, in a variation of this embodiment, a single spring may spring-load both second and third contact members 41, 45 as well.

However, in contrast to the second embodiment, in the third embodiment the bracket-shaped members 62, 64 being connected to each other and forming the mounting member 62, 64 are supported by a first post-like member 65, especially a post or a beam made from non-conductive material. The first post-like member 65 is supported at the blade bearing 33. In a variation of this configuration, the first post-like member 65 may be supported at the hub 32 or the spinner 35 as well. The first post-like member 65 is arranged at least substantially parallel to the direction of the rotation axis 38 of the rotation of the blade 34 relative to the hub 32.

Figures 11 to 14 show a fourth embodiment of a lightning current transfer system 400. In Figure 11, a perspective view is shown seen from a rear side of the hub 32, said rear side of the hub 32 facing the nacelle 36. Figure 11 shows the centre portion of the rotor head of the rotor 31 and of an adjacent construction part of the nacelle 36. Figure 12 shows the same perspective view as Figure 11. However, all portions of the nacelle 36 shown in Figure 11 and additionally the brake disk 54 supported at the hub 32 have been omitted. As the only exception, Figure 12 shows the slideway forming the fourth contact member 46 supported at the nacelle 36.

In Figure 13, a cut-out of said perspective view of Figures 11 and 12 is shown comprising the fourth embodiment of the lightning current transfer system 400, shown in more detail, the cut-out being denoted by reference sign "W" in Figure 12. Figure 14 shows said fourth embodiment of the lightning current transfer system 400 in a different viewing direction.

In this fourth embodiment of the lightning current transfer system 400, the first and second holding devices 62, 64 are supported by a second post-like member 66. Comparable to the third embodiment of the lightning current transfer system 300, the second post-like member 66 is supported at the blade bearing 33, but may also be supported at the hub 32 or the spinner 35. The second post-like member 66 is arranged at least substantially parallel to the direction of the rotation axis 38 of the rotation of the blade 34 relative to the hub 32.

As a core feature of the lightning current transfer system 400, the second contact member 41 is located at a larger distance from the rotation axis 37 of the rotation of the hub 32 relative to the nacelle 36 than the third contact member 45. Consequently, the conducting means 43 electrically connecting the first and second electrical contact arrangements 39, 44, that is the second contact member 41 and the third contact member 45, to each other is arranged at or combined with the second post-like member 66. Such, the second post-like member 66 is mainly non-conducting supporting the conducting means 43. More precisely, the first and second holding devices 62, 64 and the second post-like member 66 form the mounting member 62, 64, 66 at which the conducting means 43 is stationarily mounted. However, a portion of the second post-like member 66 may be conducting, thus integrally forming the conducting means 43 and thus providing an increased rigidness.

As can especially be seen from Figure 14, the second post-like member 66 at a bottom portion thereof is provided with a flange 67 for mounting the second post-like member 66 to the blade bearing 33. Further, to achieve a rigid construction, reinforcing ribs 68 are additionally provided for stiffening the connection of the bottom portion of the second post-like member 66 to the flange 67 as well as the connection between the second post-like member 66 and the first and second holding devices 62, 64.

By means of the lightning current transfer system 400 according to the fourth embodiment of the present invention, advantageously the second contact member 41 is arranged in a sufficient distance from the blade bearing 33 and the hub 32 so as to save the blade bearing 33 and the hub 32 from being impacted by lightning currents. Furthermore, the third contact member 45 is arranged as near as possible to the rotation axis 37 of the rotation of the hub 32 relative to the nacelle 36, thus decreasing the circumferential speed of the third contact member 45 relative to the fourth contact member 46, that is the slideway supported at the nacelle 36, thus minimizing wear of said third and fourth contact members 45, 46.

Figures 15 and 16 show a fifth embodiment of a lightning current transfer system 500. Particularly, Figures 15 and 16 show the same portion of the wind turbine generator 30 as presented beforehand in Figure 3 as the detail denoted by reference sign "Y".

In the fifth embodiment of the lightning current transfer system 500, the conducting means 43 is integrated into an outer part of the spinner 35 by means of being arranged in an isolating part of the spinner 35. Such, the isolating part of the spinner 35 forms the mounting member at which the conducting means 43 is stationarily mounted. Especially, the conducting means 43 is at least partly surrounded by material from which the spinner 35 is formed.

As shown in Figures 15 and 16, the conducting means 43 and the bracket-shaped first and second holding device 62, 64 may be replaced by a single construction element, that is a common holding and conducting device 69. The common holding and conducting device 69 preferably is made from a substantially flat portion of conducting material that can advantageously be moulded into the at least substantially flat, non-conducting material from which the spinner 35 in the present embodiment is formed, preferably glass-fibre reinforced plastic material (GFRP).

Further, in contrast to the configuration described in context with the second embodiment of the lightning current transfer system 200, the fourth contact member 46 according to Figures 15 and 16 is attached to the collar-shaped member 56 instead of being directly attached to the nacelle 36. However, this variation is optional.

The configuration according to the fifth embodiment of the lightning current transfer system 500 provides for a rigid and cost-saving solution that safely keeps the common holding and conducting device 69 in a definite position at the spinner 35 and saves the common holding and conducting device 69 from corrosion and damage. As a further advantage, holding devices as integral parts of the common holding and conducting device 69 may also partly or completely be integrated into the respective isolating portion of the spinner 35, increasing rigidness, weather-protection and durability of the construction. Furthermore, as in this case no additional and separate parts for mounting the common holding and conducting device 69 or said holding devices to the spinner 35 are necessary, simplicity of the lightning current transfer system 500 is increased.

Figures 17 to 19 describe an embodiment of a connection between the discharge ring 40, a portion of the metal mesh 70 forming a part of the blade conductor arrangement 42, wherein a metal foil is also possible, and metal plates 71, 72. In Figure 17, a radial cross-section of a portion of the rotor blade 34 is shown, the radial cross-section being seen in a viewing direction at least substantially parallel to the direction of the rotation axis 38 of the rotation of the blade 34 relative to the hub 32.

In this configuration, a portion of the metal mesh 70 facing the discharge ring 40 is mounted between said two metal plates 71, 72, preferably by riveting, the metal mesh 70 being connected to the discharge ring 40 by bolts 73 penetrating the discharge ring 40, the metal mesh 70 and the metal plates 71, 72. The metal plates 71, 72, the metal mesh 70 and rivets 74 by which the metal plates 71, 72 and the metal mesh 70 are connected to each other are preferably made from copper. The metal plates 71, 72 form a reinforced contacting means for the metal mesh 70, that is the blade conductor arrangement 42. The metal plates 71, 72 and the metal mesh 70 form a layer structure spread on the surface of the blade 34 and covered by a protection layer 75, the protection layer 75 being spread over at least nearly the whole surface of the blade 34, whereas preferably the metal mesh only covers a part of said surface of the blade 34.

In Figure 18 a detail of the embodiment of the connection between the discharge ring 40, the portion of the metal mesh 70 forming a part of a blade conductor arrangement 42, and the metal plates 71, 72, according to Figure 17, is shown. The connection established by the bolts 73 comprises a bushing 76 for each one of the bolts 73. Said detail is denoted by reference sign "V" in Figure 17. In the embodiment of the connection shown, the bolt 73 penetrates the bushing 76. Further, the bolt 73 penetrates the discharge ring, the protection layer 75, the metal plates 71, 72 and the metal mesh 70 and is held by a nut 77.

Figure 19 shows a detail of Figure 18 denoted by reference sign "U" in Figure 18. Detail "U" shows the fit of a countersunk head of the bolt 73 in a corresponding receptacle. Due to work tolerance, a poor contact between the countersunk head of the bolt 73 and the corresponding receptacle may occur so that for example contact is only achieved at small locations 78 schematically shown in Figure 19, whereas along most of the surface of the countersunk head of the bolt 73 gaps 79 occur that separate the head of the bolt 73 from the discharge ring 40, thus decreasing the conductivity of the connection.

To this purpose, the bushings 76 are arranged, providing at front surfaces 80 thereof for a definite electric contact to the discharge ring 40 on the one side and to the first metal plate 71 on the other side. Preferably, the bushings 76 and, additionally, the nuts 77 are welded to the first or second metal plate 71, 72, respectively. By these welded connections 81, a safe connection and simple mounting of the discharge ring 40 to the blade 34 is obtained.

## Claims

1. A lightning current transfer system (100) for a wind turbine generator (30),
the wind turbine generator (30) comprising
a rotor (31) including a hub (32), a blade bearing (33), a blade (34), and
a spinner (35), and
a nacelle (36),
wherein the blade (34) is rotatable relative to the hub (32) and the hub (32) is rotatable relative to the nacelle (36),
wherein the lightning current transfer system (100) comprises
a first electrical contact arrangement (39) including first and second complementary contact members (40, 41),
the first contact member (40) being supported at the blade (34) and being in electrical connection with a blade conductor arrangement (42) arranged on the blade (34),
the second contact member (41) being supported at the hub (32), the spinner (35) or the blade bearing (33),
wherein the first and the second contact members (40, 41) are arranged to be electrically connectable to each other,
conducting means (43) connected to the first electrical contact arrangement (39),
a second electrical contact arrangement (44) connected to the conducting means (43) and including third and fourth complementary contact members (45, 46),
the third contact member (45) being supported at the hub (32), the spinner (35) or the blade bearing (33),
the fourth contact member (46) being supported at the nacelle (36),
wherein the third and the fourth contact members (45, 46) are arranged to be electrically connectable to each other,
the lightning current transfer system (100) providing a current path for a lightning current from the blade (34) to the nacelle (36), the current path including the first electric contact arrangement (39), the conducting means (43) and the second electric contact arrangement (44), the first contact member (40) being arranged in a predetermined distance (47) from a blade root of the blade (34), said blade root being mounted to the hub (32) by means of the blade bearing (33), and
wherein the first contact member (40) is formed as a discharge ring (40) being connected to the blade conductor arrangement (42), the blade conductor arrangement (42) being formed by a metal foil or a metal mesh extending over at least a part of a longitudinal extension of the blade (34),
wherein the conducting means (43) is mounted stationarily at a mounting member (59, 62, 64, 66), the mounting member (59, 62, 64, 66) being supported at the spinner (35), the hub (32) or the blade bearing (33) or being formed by the spinner (35), the hub (32) or the blade bearing (33), **characterized in that** the lightning current transfer system (100) is disposed outside of the hub (32) and inside of the spinner (35) and/or inside of the nacelle (36).

2. The lightning current transfer system (100) according to claim 1,
wherein the conducting means (43) is mounted stationarily at the mounting member (59, 62, 64, 66) for at least 50 percent of its entire length.

3. The lightning current transfer system (100) according to claim 1,
wherein the first contact member (40) comprises a first electrically conducting slideway, and wherein the second contact member (41) comprises a first lumped contacting means, or
wherein one of the third and fourth contact members (45, 46) comprises a second lumped contacting means, and wherein the other one of the third and fourth contact members (45, 46) comprises a second electrically conducting slideway.

4. The lightning current transfer system (100) according to claim 3,
wherein the first or the second lumped contacting means include a sliding contact, a spark gap, a brush (61, 63) or a roller arrangement.

5. The lightning current transfer system (100) according to claim 3,
wherein a transport member (57) for enabling a movement along a predetermined path between the first or the second lumped contacting means and the corresponding first or second electrically conducting slideway (46) is provided, the transport member (57) comprising at least one roller (58) adapted to roll along the first or the second electrically conducting slideway, the first or the second lumped contacting means being mounted to the transport member (57).

6. The lightning current transfer system (100) according to claim 3,
wherein the wind turbine generator (30) further comprises a main bearing support arrangement (48), said main bearing support arrangement (48) comprising bearing support components from the group of main bearing housing (49), brake mounting means (50) or a caliper (53) supported by brake mounting means (50), and wherein one of the third and fourth contact members (45, 46) is supported by one of the bearing support components.

7. The lightning current transfer system (100) according to claim 4 or 5,
comprising at least one non-conducting roller, the non-conducting roller comprising non-conducting material, preferably long-term life cycle non-conducting material such as ceramic.

8. The lightning current transfer system (100) according to claim 4,
wherein the third contact member (45) comprises a brush (61) connected to a first holding device (62), the first holding device (62) being supported by the hub (32), the spinner (35) or the blade bearing (33), and wherein the second contact member (41) comprises a brush (63) connected to a second holding device (64), the second holding device (64) being supported by the hub (32), the spinner (35) or the blade bearing (33),
wherein the first and second holding devices (62, 64) form a bracket-shaped member each, the bracket-shaped members being connected to each other forming the mounting member at which the conducting means (43) is stationarily mounted, the second and third contact member (41, 45) thereby facing each other, the second and third contact member (41, 45) being located at approximately the same distance from a rotation axis (37) of the rotation of the hub (32) relative to the nacelle (36), the second and third contact member (41, 45) being spring loaded against each other towards the first and fourth contact (40, 46) member, respectively.

9. The lightning current transfer system (100) according to claim 4,
wherein the third contact member (45) comprises a brush (61) connected to a first holding device (62), and
wherein the second contact member (41) comprises a brush (63) connected to a second holding device (64),
wherein the first and second holding devices (62, 64) form a bracket-shaped member each, the bracket-shaped members being connected to each other forming the mounting member at which the conducting means (43) is stationarily mounted, the second and third contact member (41, 45) thereby facing each other, the second and third contact member (41, 45) being located at approximately the same distance from a rotation axis (37) of the rotation of the hub (32) relative to the nacelle (36), the second and third contact member (41, 45) being spring loaded against each other towards the first and fourth contact member (40, 46), respectively,
wherein said first and second holding devices (62, 64) are supported by a first post-like member (65), the first post-like member (65) being supported at the hub (32), the spinner (35) or the blade bearing (33), the first post-like member (65) being arranged at least substantially parallel to the direction of a rotation axis (38) of the rotation of the blade (34) relative to the hub (32).

10. The lightning current transfer system (100) according to claim 4,
wherein the third contact member (45) comprises a brush (61) connected to a first holding device (62), and
wherein the second contact member (45) comprises a brush (63) connected to a second holding device (64),
wherein the first and second holding devices (62, 64) are supported by a second post-like member (66), the second post-like member (66) being supported at the hub (32), the spinner (35) or the blade bearing (33), the second post-like member (66) being arranged at least substantially parallel to the direction of a rotation axis (38) of the rotation of the blade (34) relative to the hub (32), the first and second holding devices (62, 64) and the second post-like member (66) forming the mounting member at which the conducting means (43) is stationarily mounted, wherein the second contact member (41) is located at a larger distance from a rotation axis (37) of the rotation of the hub (32) relative to the nacelle (36) than the third contact member (45),
wherein said conducting means (43) electrically connecting said first and second electrical contact arrangements (39, 44) to each other is arranged at or combined with the second post-like member (66).

11. The lightning current transfer system (100) according to claim 4,
wherein the third contact member (45) comprises a brush (61) connected to a first holding device (62), and
wherein the second contact member (41) comprises a brush (63) connected to a second holding device (62),
wherein the first and second holding devices (62, 64) are adapted to form the conducting means (43).

12. The lightning current transfer system (100) according to claim 1,
wherein the conducting means (43) is integrated into an outer part of the spinner (35) by means of being arranged in an isolating part of the spinner (35) forming the mounting member at which the conducting means (43) is stationarily mounted, wherein the conducting means (43) is at least partly surrounded by material from which the spinner (35) is formed.

13. The lightning current transfer system (100) according to claim 1,
wherein the conducting means (43) is made of metal.

14. The lightning current transfer system (100) according to claim 1,
wherein the conducting means (43) extends along a straight line between the second contact member (41) and the third contact member (45).

15. The lightning current transfer system (100) according to claim 1,
wherein a portion of the metal foil or the metal mesh facing the discharge ring (40) is mounted between two metal plates (71, 72), preferably by riveting, the metal foil or the metal mesh being connected to the discharge ring (40) by bolts (73) penetrating the discharge ring (40), the metal foil or the metal mesh and the metal plates (71, 72).

16. The lightning current transfer system (100) according to claim 15,
wherein between the metal foil or the metal mesh and the metal plates (71. 72) on the one hand and the discharge ring (40) on the other hand bushings (76) are arranged, the bushings (76) being adapted to form an electrical connection between the discharge ring (40) and the metal foil or the metal mesh.

17. The lightning current transfer system (100) according to claim 16,
wherein the bushings (76) are welded to the discharge ring (40) or to one of the metal plates (71, 72) facing the discharge ring (40), or wherein the bushings (76) are bolted, preferably by means of being penetrated by the bolts (73), to the discharge ring (40) or one of the metal plates (71, 72) facing the discharge ring (40).

18. The lightning current transfer system (100) according to claim 1,
wherein the distance between the discharge ring (40) and the blade root is predetermined so as to prevent electrical spark-over from the discharge ring (40) to the hub (32) or to blade connection means, preferably said distance is predetermined to be between 0.2 meter and 1 meter.

19. The lightning current transfer system (100) according to claim 1,
wherein the spinner (35) is made of non-conducting material, preferably of glass-fibre reinforced plastic material.

20. A wind turbine generator (30) comprising a lightning current transfer system (100) according to claim 1.

## Patentansprüche

1. Ein Blitzstrom-Übertragungssystem (100) für einen Windturbinengenerator (30), wobei der Wundturbinengenerator (30) folgendes umfasst:
einen Rotor (31) mit einer Nabe (32), einem Rotorblattlager (33), einem Rotorblatt (34) und
einem Spinner (35) und
einer Gondel (36),
wobei das Rotorblatt (34) relativ zu der Nabe (32) drehbar ist und die Nabe (32) relativ zu der Gondel (36) drehbar ist,
wobei das Blitzstrom-Übertragungssystem (100) folgendes umfasst:
eine erste elektrische Kontaktanordnung (39) mit ersten und zweiten komplementären Kontaktgliedern (40, 41),
wobei das erste Kontaktglied (40) an dem Rotorblatt (34) gelagert ist und mit einer auf dem Rotorblatt (34) angeordneten Rotorblatt-Leiteranordnung (42) elektrisch verbunden ist,
wobei das zweite Kontaktglied (41) an der Nabe (32), dem Spinner (35) oder dem Rotorblattlager (33) gelagert ist,
wobei die ersten und die zweiten Kontaktglieder (40, 41) so angeordnet sind, dass sie elektrisch miteinander verbindbar sind,
mit der ersten elektrischen Kontaktanordnung (39) verbundene Leitmittel (43), eine zweite elektrische Kontaktanordnung (44), die mit dem Leitmittel (43) verbunden ist und dritte und vierte komplementäre Kontaktglieder (45, 46) beinhaltet,
wobei das dritte Kontaktglied (45) an der Nabe (32), dem Spinner (35) oder dem Rotorblattlager (33) gelagert ist,
wobei das vierte Kontaktglied (46) an der Gondel (36) gelagert ist,
wobei das dritte und das vierte Kontaktglied (45, 46) so angeordnet sind, dass sie elektrisch miteinander verbindbar sind,
wobei das Blitzstrom-Übertragungssystem (100) einen Strompfad für einen Blitzstrom vom Rotorblatt (34) zur Gondel (36) vorsieht, wobei der Strompfad die erste elektrische Kontaktanordnung (39), das Leitmittel (43) und die zweite elektrische Kontaktanordnung (44) beinhaltet, wobei das erste Kontaktglied (40) in einem vorbestimmten Abstand (47) von der Rotorblattwurzel des Rotorblatts (34) angeordnet ist, wobei die Rotorblattwurzel mittels des Rotorblattlagers (33) an der Nabe (32) montiert ist, und
wobei das erste Kontaktglied (40) als Entladungsring (40) geformt ist, der mit der Rotorblatt-Leiteranordnung (42) verbunden ist, wobei die Rotorblatt-Leiteranordnung (42) durch eine Metallfolie oder ein Metallnetz gebildet ist, das sich über mindestens einen Teil einer Längserstreckung des Rotorblatts (34) erstreckt,
wobei das Leitmittel (43) stationär an einem Befestigungselement (59, 62, 64, 66) angebracht ist, wobei das Befestigungselement (59, 62, 64, 66) an dem Spinner (35), der Nabe (32) oder dem Rotorblattlager (33) gelagert ist oder durch den Spinner (35), die Nabe (32) oder das Rotorblattlager (33) gebildet wird,
**dadurch gekennzeichnet, dass** das Blitzstrom-Übertragungssystem (100) außerhalb der Nabe (32) und innerhalb des Spinners (35) und / oder innerhalb der Gondel (36) angeordnet ist.

2. Das Blitzstrom-Übertragungssystem (100) gemäß Anspruch 1, wobei das Leitmittel (43) über mindestens 50 Prozent seiner gesamten Länge stationär an dem Befestigungselement (59, 62, 64, 66) angebracht ist.

3. Das Blitzstrom-Übertragungssystem (100) gemäß Anspruch 1,
wobei das erste Kontaktglied (40) eine erste elektrisch leitende Gleitbahn umfasst und wobei das zweite Kontaktglied (41) ein erstes konzentriertes Kontaktmittel umfasst, oder
wobei eines der dritten und vierten Kontaktglieder (45, 46) ein zweites konzentriertes Kontaktmittel umfasst, und wobei das andere der dritten und vierten Kontaktglieder (45, 46) eine zweite elektrisch leitende Gleitbahn umfasst.

4. Das Blitzstrom-Übertragungssystem (100) gemäß Anspruch 3, wobei das erste oder das zweite konzentrierte Kontaktmittel einen Gleitkontakt, einen Elektrodenabstand, eine Bürste (61, 63) oder eine Rollenanordnung beinhaltet.

5. Das Blitzstrom-Übertragungssystem (100) gemäß Anspruch 3, wobei ein Transportelement (57) zum Ermöglichen einer Bewegung entlang eines vorbestimmten Pfades zwischen dem ersten oder dem zweiten konzentrierten Kontaktmittel und der entsprechenden ersten oder zweiten elektrisch leitenden Gleitbahn (46) vorgesehen ist, wobei das Transportelement (57) mindestens eine Rolle (58) umfasst, die angepasst ist, entlang der ersten oder der zweiten elektrisch leitenden Gleitbahn zu rollen, wobei das erste oder das zweite konzentrierte Kontaktmittel auf dem Transportelement (57) angebracht ist.

6. Das Blitzstrom-Übertragungssystem (100) gemäß Anspruch 3,
wobei der Windturbinengenerator (30) ferner eine Hauptlageraufhängungsanordnung (48) umfasst, wobei die Hauptlageraufhängungsanordnung (48) Lageraufhängungselemente aus der Gruppe bestehend aus Hauptlagergehäuse (49), Bremsbefestigungsmittel (50) oder einem durch das Bremsbefestigungsmittel (50) gelagerten Bremssattel (53) umfasst und
wobei eines der dritten und vierten Kontaktglieder (45, 46) von einem der Lageraufhängungselemente gelagert wird.

7. Das Blitzstrom-Übertragungssystem (100) gemäß Anspruch 4 oder 5, umfassend mindestens eine nichtleitende Rolle, wobei die nichtleitende Rolle nicht-leitendes Material, bevorzugt langlebiges nicht-leitendes Material wie Keramik umfasst.

8. Das Blitzstrom-Übertragungssystem (100) gemäß Anspruch 4,
wobei das dritte Kontaktglied (45) eine mit einer ersten Haltevorrichtung (62) verbundene Bürste (61) umfasst, wobei die erste Haltevorrichtung (62) durch die Nabe (32) den Spinner (35) oder das Rotorblattlager (33) gelagert ist, und wobei das zweite Kontaktglied (41) eine mit einer zweiten Haltevorrichtung (64) verbundene Bürste (63) umfasst, wobei die zweite Haltevorrichtung (64) durch die Nabe (32) den Spinner (35) oder das Rotorblattlager (33) gelagert ist, wobei die erste und zweite Haltevorrichtung (62,64) jeweils ein klammerförmiges Element bilden, wobei die klammerförmigen Elemente miteinander verbunden sind, um das Befestigungselement zu bilden, an dem das Leitmittel (43) stationär angebracht ist, wobei das zweite und dritte Kontaktglied (41, 45) einander zugewandt sind, wobei das zweite und dritte Kontaktglied (41, 45) in etwa dem gleichen Abstand von einer Drehachse (37) der Drehbewegung der Nabe (32) relativ zu der Gondel (36) angeordnet sind, wobei das zweite und dritte Kontaktglied (41, 45) gegeneinander in Richtung des ersten und vierten Kontaktglieds (40, 46) jeweils federbelastet sind.

9. Das Blitzstrom-Übertragungssystem (100) gemäß Anspruch 4,
wobei das dritte Kontaktglied (45) eine mit einer ersten Haltevorrichtung (62) verbundene Bürste (61) umfasst, und
wobei das zweite Kontaktglied (41) eine mit einer zweiten Haltevorrichtung (64) verbundene Bürste (63) umfasst,
wobei die erste und zweite Haltevorrichtung (62, 64) jeweils ein klammerförmiges Element bilden, wobei die klammerförmigen Elemente miteinander verbunden sind, um das Befestigungselement zu bilden, an dem das Leitmittel (43) stationär angebracht ist, wobei das zweite und dritte Kontaktglied (41, 45) einander zugewandt sind, wobei das zweite und dritte Kontaktglied (41, 45) in etwa dem gleichen Abstand von einer Drehachse (37) der Drehbewegung der Nabe (32) relativ zu der Gondel (36) angeordnet sind, wobei das zweite und dritte Kontaktglied (41, 45) gegeneinander in Richtung des ersten und vierten Kontaktglieds (40, 46) jeweils federbelastet sind, wobei die ersten und zweiten Haltevorrichtungen (62, 64) von einem ersten säulenartigen Element (65) getragen sind, wobei das erste säulenartige Element (65) an der Nabe (32), dem Spinner (35) oder dem Rotorblattlager (33) gelagert ist, wobei das erste säulenartige Element (65) zumindest im Wesentlichen parallel zur Richtung einer Drehachse (38) der Drehung des Rotorblatts (34) relativ zu der Nabe (32) angeordnet ist.

10. Das Blitzstrom-Übertragungssystem (100) gemäß Anspruch 4,
wobei das dritte Kontaktglied (45) eine mit einer ersten Haltevorrichtung (62) verbundene Bürste (61) umfasst, und
wobei das zweite Kontaktglied (45) eine mit einer zweiten Haltevorrichtung (64) verbundene Bürste (63) umfasst,
wobei die ersten und zweiten Haltevorrichtungen (62, 64) von einem zweiten säulenartigen Element (66) gelagert werden, wobei das zweite säulenartige Element (66) an der Nabe (32), dem Spinner (35) oder dem Rotorblattlager (33) gelagert ist, wobei das zweite säulenartige Element (66) zumindest im Wesentlichen parallel zur Richtung einer Drehachse (38) der Drehung des Rotorblatts (34) relativ zu der Nabe (32) angeordnet ist, wobei die ersten und zweiten Haltevorrichtungen (62, 64) und das zweite säulenartige Element (66) das Befestigungselement bildet, an dem das Leitmittel (43) stationär angebracht ist, wobei das zweite Kontaktglied (41) in einem größeren Abstand von einer Drehachse (37) der Drehbewegung der Nabe (32) relativ zu der Gondel (36) angeordnet ist als das dritte Kontaktelement (45),
wobei das Leitmittel (43), das die ersten und zweiten elektrischen Kontaktanordnungen (39, 44) elektrisch miteinander verbindet, an dem zweiten säulenartigen Element (66) angeordnet oder mit diesem kombiniert ist.

11. Das Blitzstrom-Übertragungssystem (100) gemäß Anspruch 4,
wobei das dritte Kontaktglied (45) eine mit einer ersten Haltevorrichtung (62) verbundene Bürste (61) umfasst, und
wobei das zweite Kontaktglied (41) eine mit einer zweiten Haltevorrichtung (62) verbundene Bürste (63) umfasst,
wobei die ersten und zweiten Haltevorrichtungen (62, 64) angepasst sind, um das Leitmittel (43) zu bilden.

12. Das Blitzstrom-Übertragungssystem (100) gemäß Anspruch 1, wobei das Leitmittel (43) in einem äußeren Teil des Spinners (35) integriert ist, dadurch, dass es in einem isolierenden Teil des Spinners (35) angeordnet ist, der das Befestigungselement bildet, an dem das Leitmittel (43) stationär angebracht ist, wobei das Leitmittel (43) zumindest teilweise von Material umgeben ist, aus dem der Spinner (35) gebildet ist.

13. Das Blitzstrom-Übertragungssystem (100) gemäß Anspruch 1, wobei das Leitmittel (43) aus Metall hergestellt ist.

14. Das Blitzstrom-Übertragungssystem (100) gemäß Anspruch 1, wobei sich das Leitmittel (43) entlang einer geraden Linie zwischen dem zweiten Kontaktglied (41) und dem dritten Kontaktglied (45) erstreckt.

15. Das Blitzstrom-Übertragungssystem (100) gemäß Anspruch 1, wobei ein Teil der Metallfolie oder des dem Entladungsring (40) zugewandten Metallnetzes zwischen zwei Metallplatten (71, 72), vorzugsweise durch Vernieten, angebracht ist, wobei die Metallfolie oder das Metallnetz mit dem Entladungsring (40) mittels den Entladungsring (40), die Metallfolie oder das Metallnetz und die Metallplatten (71, 72) durchdringender Schrauben (73) verbunden ist.

16. Das Blitzstrom-Übertragungssystem (100) gemäß Anspruch 15, wobei zwischen der Metallfolie oder dem Metallnetz und den Metallplatten (71, 72) auf der einen Seite und dem Entladungsring (40) auf der anderen Seite Buchsen (76) angeordnet sind, wobei die Buchsen (76) angepasst sind, eine elektrische Verbindung zwischen dem Entladungsring (40) und der Metallfolie oder dem Metallnetz zu bilden.

17. Das Blitzstrom-Übertragungssystem (100) gemäß Anspruch 16, wobei die Buchsen (76) an den Entladungsring (40) oder an eine der dem Entladungsring (40) zugewandten Metallplatten (71, 72) geschweißt sind, oder wobei die Buchsen (76) mit dem Entladungsring (40) oder einer der dem Entladungsring (40) zugewandten Metallplatten (71, 72) verschraubt sind, vorzugsweise dadurch, dass sie von den Schrauben (73) durchdrungen werden.

18. Das Blitzstrom-Übertragungssystem (100) gemäß Anspruch 1, wobei der Abstand zwischen dem Entladungsring (40) und der Rotorblattwurzel vorbestimmt ist, um einen elektrische Funkenüberschlag von dem Entladungsring (40) zu der Nabe (32) oder zu den Rotorblattverbindungsmitteln zu verhindern, wobei der Abstand vorzugsweise auf zwischen 0,2 Meter und 1 Meter vorbestimmt ist.

19. Das Blitzstrom-Übertragungssystem (100) gemäß Anspruch 1, wobei der Spinner (35) aus nichtleitendem Material, vorzugsweise aus glasfaserverstärktem Kunststoffmaterial hergestellt ist.

20. Ein Windturbinengenerator (30) umfassend ein Blitzstrom-Übertragungssystem (100) gemäß Anspruch 1.

## Revendications

1. Système de transmission de courant de foudre (100) pour un générateur de turbine d'éolienne (30), le générateur de turbine d'éolienne (30) comprenant :
un rotor (31) comprenant un moyeu (32), un palier de pale (33), une pale (34) ; et
un nez de rotor (35) ; et
une nacelle (36) ;
dans lequel la pale (34) peut tourner par rapport au moyeu (32) et le moyeu (32) peut tourner par rapport à la nacelle (36) ;
dans lequel le système de transmission de courant de foudre (100) comprend :
un premier agencement de contact électrique (39) comprenant des premier et deuxième éléments de contact (40, 41) complémentaires ;
le premier élément de contact (40) étant maintenu au niveau de la pale (34) et étant en connexion électrique avec un agencement de conducteur de pale (42) agencé sur la pale (34) ;
le deuxième élément de contact (41) étant maintenu au niveau du moyeu (32), du nez de rotor (35) ou du palier de pale (33) ;
dans lequel les premier et deuxième éléments de contact (40, 41) sont agencés de façon à pouvoir être connectés électriquement l'un à l'autre ;
un moyen conducteur (43) connecté au premier agencement de contact électrique (39) ;
un deuxième agencement de contact électrique (44) connecté au moyen conducteur (43) et comprenant des troisième et quatrième éléments de contact (45, 46) complémentaires ;
le troisième élément de contact (45) étant maintenu au niveau du moyeu (32), du nez de rotor (35) ou du palier de pale (33) ;
le quatrième élément de contact (46) étant maintenu au niveau de la nacelle (36), les troisième et quatrième éléments de contact (45, 46) étant agencés de façon à pouvoir être connectés électriquement l'un à l'autre ;
le système de transmission de courant de foudre (100) fournissant un trajet de courant pour un courant de foudre circulant de la pale (34) vers la nacelle (36), le trajet de courant comprenant le premier agencement de contact électrique (39), le moyen conducteur (43) et le deuxième agencement de contact électrique (44), le premier élément de contact (40) étant agencé à une distance prédéterminée (47) d'un pied de pale de la pale (34), ledit pied de pale étant fixé au moyeu (32) au moyen du palier de pale (33) ; et
dans lequel le premier élément de contact (40) prend la forme d'une bague de décharge (40) connectée à l'agencement de conducteur de pale (42), l'agencement de conducteur de pale (42) étant formé par un déflecteur métallique ou un maillage métallique s'étendant au-dessus d'au moins une partie d'une extension longitudinale de la pale (34) ;
dans lequel le moyen conducteur (43) est fixé de façon stationnaire à un élément de fixation (59, 62, 64, 66), l'élément de fixation (59, 62, 64, 66) étant maintenu au niveau du nez de rotor (35), du moyeu (32) ou du palier de pale (33) ou étant formé par le nez de rotor (35), le moyeu (32) ou le palier de pale (33) ;
**caractérisé en ce que** le système de transmission de courant de foudre (100) est disposé à l'extérieur du moyeu (32) et à l'intérieur du nez de rotor (35) et/ou à l'intérieur de la nacelle (36).

2. Système de transmission de courant de foudre (100) selon la revendication 1,
dans lequel le moyen conducteur (43) est fixé de façon stationnaire à l'élément de fixation (59, 62, 64, 66) pour au moins 50 pour cent de l'ensemble de sa longueur.

3. Système de transmission de courant de foudre (100) selon la revendication 1,
dans lequel le premier élément de contact (40) comprend une première glissière électriquement conductrice et dans lequel le deuxième élément de contact (41) comprend un premier moyen de contact localisé ; ou
dans lequel un élément parmi les troisième et quatrième éléments de contact (45, 46) comprend un deuxième moyen de contact localisé et dans lequel l'autre élément parmi les troisième et quatrième éléments de contact (45, 46) comprend une deuxième glissière électriquement conductrice.

4. Système de transmission de courant de foudre (100) selon la revendication 3,
dans lequel les premier ou deuxième moyens de contact localisé comprennent un contact glissant, un éclateur à étincelles, une brosse (61, 63) ou un agencement de rouleau.

5. Système de transmission de courant de foudre (100) selon la revendication 3,
dans lequel un élément de transport (57) est prévu pour permettre un mouvement le long d'un trajet prédéterminé entre le premier ou deuxième moyen de contact localisé et la première ou deuxième glissière (46) électriquement conductrice correspondante, l'élément de transport (57) comprenant au moins un rouleau (58) conçu pour rouler le long de la première ou deuxième glissière électriquement conductrice, le premier ou deuxième moyen de contact localisé étant fixé à l'élément de transport (57).

6. Système de transmission de courant de foudre (100) selon la revendication 3,
dans lequel le générateur de turbine d'éolienne (30) comprend en outre un agencement de support de palier principal (48), ledit agencement de support de palier principal (48) comprenant des composants de support de palier appartenant au groupe comprenant le carter de palier principal (49), le moyen de fixation de frein (50) ou un étrier (53) maintenu par le moyen de fixation de frein (50) ; et
dans lequel un élément parmi les troisième et quatrième éléments de contact (45, 46) est maintenu par un des composants de support de palier.

7. Système de transmission de courant de foudre (100) selon la revendication 4 ou 5, comprenant au moins un rouleau non conducteur, le rouleau non conducteur comprenant un matériau non conducteur, de préférence un matériau non conducteur à long cycle de vie tel que la céramique.

8. Système de transmission de courant de foudre (100) selon la revendication 4,
dans lequel le troisième élément de contact (45) comprend une brosse (61) connectée à un premier dispositif de maintien (62), le premier dispositif de maintien (62) étant maintenu par le moyeu (32), le nez de rotor (35) ou le palier de pale (33) ; et
dans lequel le deuxième élément de contact (41) comprend une brosse (63) connectée à un deuxième dispositif de maintien (64), le deuxième dispositif de maintien (64) étant maintenu par le moyeu (32), le nez de rotor (35) ou le palier de pale (33) ;
dans lequel les premier et deuxième dispositifs de maintien (62, 64) forment chacun un élément en forme de braquet, les éléments en forme de braquet connectés les uns aux autres formant l'élément de fixation au niveau duquel le moyen conducteur (43) est fixé de façon stationnaire, les deuxième et troisième éléments de contact (41, 45) se faisant ainsi face, les deuxième et troisième éléments de contact (41, 45) étant positionnés à approximativement la même distance d'un axe de rotation (37) pour ce qui est de la rotation du moyeu (32) par rapport à la nacelle (36), les deuxième et troisième éléments de contact (41, 45) étant chargés par ressort l'un contre l'autre direction en des premier et quatrième éléments de contact (40, 46), respectivement.

9. Système de transmission de courant de foudre (100) selon la revendication 4,
dans lequel le troisième élément de contact (45) comprend une brosse (61) connectée à un premier dispositif de maintien (62) ; et
dans lequel le deuxième élément de contact (41) comprend une brosse (63) connectée à un deuxième dispositif de maintien (64) ;
dans lequel les premier et deuxième dispositifs de maintien (62, 64) forment chacun un élément en forme de braquet, les éléments en forme de braquet connectés l'un à l'autre formant l'élément de fixation au niveau duquel le moyen conducteur (43) est fixé de façon stationnaire, les deuxième et troisième éléments de contact (41, 45) se faisant ainsi face, les deuxième et troisième éléments de contact (41, 45) étant positionnés à approximativement la même distance d'un axe de rotation (37) pour ce qui est de la rotation du moyeu (32) par rapport à la nacelle (36), les deuxième et troisième éléments de contact (41, 45) étant chargés par ressort l'un contre l'autre en direction du premier et quatrième élément de contact (40, 46), respectivement ;
dans lequel lesdits premier et deuxième dispositifs de maintien (62, 64) sont maintenus par un premier élément de type poteau (65), le premier élément de type poteau (65) étant maintenu au niveau du moyeu (32), du nez de rotor (35) ou du palier de pale (33), le premier élément de type poteau (65) étant agencé au moins sensiblement parallèlement à la direction d'un axe de rotation (38) pour ce qui est de la rotation de la pale (34) par rapport au moyeu (32).

10. Système de transmission de courant de foudre (100) selon la revendication 4,
dans lequel le troisième élément de contact (45) comprend une brosse (61) connectée à un premier dispositif de maintien (62) ; et
dans lequel le deuxième élément de contact (45) comprend une brosse (63) connectée à un deuxième dispositif de maintien (64) ;
dans lequel les premier et deuxième dispositifs de maintien (62, 64) sont maintenus par un deuxième élément de type poteau (66), le deuxième élément de type poteau (66) étant maintenu au niveau du moyeu (32), du nez de rotor (35) ou du palier de pale (33), le deuxième élément de type poteau (66) étant agencé au moins sensiblement parallèlement à la direction d'un axe de rotation (38) pour ce qui est de la rotation de la pale (34) par rapport au moyeu (32), les premier et deuxième dispositifs de maintien (62, 64) et le deuxième élément de type poteau (66) formant l'élément de fixation au niveau duquel le moyen conducteur (43) est fixé de façon stationnaire ;
dans lequel le deuxième élément de contact (41) est positionné à une plus grande distance d'un axe de rotation (37), pour ce qui est de la rotation du moyeu (32) par rapport à la nacelle (36), que le troisième élément de contact (45) ;
dans lequel ledit moyen conducteur (43) connectant électriquement lesdits premier et deuxième agencements de contact électrique (39, 44) l'un à l'autre est agencé au niveau du deuxième élément de type poteau (66) ou est combiné à lui.

11. Système de transmission de courant de foudre (100) selon la revendication 4,
dans lequel le troisième élément de contact (45) comprend une brosse (61) connectée à un premier dispositif de maintien (62) ; et
dans lequel le deuxième élément de contact (41) comprend une brosse (63) connectée à un deuxième dispositif de maintien (62) ;
dans lequel les premier et deuxième dispositifs de maintien (62, 64) sont conçus pour former le moyen conducteur (43).

12. Système de transmission de courant de foudre (100) selon la revendication 1,
dans lequel le moyen conducteur (43) est intégré dans une partie extérieure du nez de rotor (35) en étant agencé dans une partie isolante du nez de rotor (35) formant l'élément de fixation au niveau duquel le moyen conducteur (43) est fixé de façon stationnaire, dans lequel le moyen conducteur (43) est au moins en partie entouré par le matériau formant le nez de rotor (35).

13. Système de transmission de courant de foudre (100) selon la revendication 1,
dans lequel le moyen conducteur (43) est fabriqué à partir de métal.

14. Système de transmission de courant de foudre (100) selon la revendication 1,
dans lequel le moyen conducteur (43) s'étend le long d'une ligne droite située entre le deuxième élément de contact (41) et le troisième élément de contact (45).

15. Système de transmission de courant de foudre (100) selon la revendication 1,
dans lequel une partie du déflecteur métallique ou du maillage métallique faisant face à la bague de décharge (40) est fixée entre deux plaques métalliques (71, 72), de préférence par rivetage, le déflecteur métallique ou le maillage métallique étant connectés à la bague de décharge (40) par des boulons (73) pénétrant dans la bague de décharge (40), le déflecteur métallique ou le maillage métallique et les plaques métalliques (71, 72).

16. Système de transmission de courant de foudre (100) selon la revendication 15,
dans lequel des douilles (76) sont agencées entre le déflecteur métallique ou le maillage métallique et les plaques métalliques (71, 72) d'une part et la bague de décharge (40) d'autre part, les douilles (76) étant conçues pour former une connexion électrique entre la bague de décharge (40) et le déflecteur métallique ou le maillage métallique.

17. Système de transmission de courant de foudre (100) selon la revendication 16,
dans lequel les douilles (76) sont soudées à la bague de décharge (40) ou à une des plaques métalliques (71, 72) faisant face à la bague de décharge (40) ou dans lequel les douilles (76) sont boulonnées, de préférence par pénétration des boulons (73), à la bague de décharge (40) ou à une des plaques métalliques (71, 72) faisant face à la bague de décharge (40).

18. Système de transmission de courant de foudre (100) selon la revendication 1,
dans lequel la distance entre la bague de décharge (40) et le pied de pale est prédéterminée de façon à empêcher la présence d'un amorçage par étincelle électrique de la bague de décharge (40) au moyeu (32) ou aux moyens de connexion de pale, ladite distance étant de préférence prédéterminée pour être comprise entre 0,2 mètre et 1 mètre.

19. Système de transmission de courant de foudre (100) selon la revendication 1,
dans lequel le nez de rotor (35) est fabriqué en matériau non conducteur, de préférence un matériau plastique renforcé de fibre de verre.

20. Générateur de turbine d'éolienne (30) comprenant un système de transmission de courant de foudre (100) selon la revendication 1.
